# EUROPEAN PATENT APPLICATION

(11) **EP 4 694 268 A1**
(43) Date of publication of application: **11.02.2026**
(21) Application number: 24797270.6
(22) Date of filing: 08.03.2024
(51) Int. Cl.: H04W 16/14, H04W 48/08, H04L 5/00, H04L 5/14, H04W 84/04, H04W 88/08, H04W 92/20

(54) **ELECTRONIC DEVICE AND METHOD FOR SPECTRUM AGGREGATION IN WIRELESS COMMUNICATION SYSTEM**

(30) Priority: 28.04.2023 KR 20230056696
(71) Applicant: Samsung Electronics Co., Ltd., Suwon-si, Gyeonggi-do 16677 (KR)
(72) Inventor: SONG, Junhyuk, Suwon-si, Gyeonggi-do 16677 (KR); KANG, Seungwon, Suwon-si, Gyeonggi-do 16677 (KR); KHO, Youngsung, Suwon-si, Gyeonggi-do 16677 (KR); KIM, Chulmin, Suwon-si, Gyeonggi-do 16677 (KR); LEE, Chungkeun, Suwon-si, Gyeonggi-do 16677 (KR)
(74) Representative: Gulde & Partner
(86) International application number: PCT/KR2024/003050
(87) International publication number: WO 2024/225608

(57) **Abstract**

An electronic device for a first distributed unit (DU) is provided, and a memory for storing instructions can be included. When the instructions are executed on the first DU, the instructions can cause the first DU to: transmit a setup request message to a second DU through a communication interface between the first DU and the second DU; and receive a setup response message from the second DU. The setup request message can include: a global ID for a base station of the first DU; first identification information about the first DU at the base station; and cell information about each cell of one or more first cells of the first DU, and can include: a global ID for a base station of the second DU; second identification information about the second DU at the base station; and cell information about each cell of one or more second cells of the second DU.

## Description

### [Technical Field]

The present disclosure relates to a wireless communication system, and more specifically, to an electronic device and a method for spectrum aggregation in a wireless communication system.

### [Background Art]

In order to meet the increasing demand for wireless data traffic after the commercialization of 4G (4^{th} generation) communication systems, efforts have been made to develop improved 5G (5^{th} generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), non-orthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines various standards in an application protocol of E2 interface between an E2 node and a near-real-time (Near-RT) radio access network (RAN) intelligent controller (RIC).

Looking back at the development process of wireless communication generations, technologies have been developed mainly for services targeting humans, such as voice, multimedia, and data. After the commercialization of the 5^{th} Generation (5G) communication system, it is expected that the number of connected devices will increase explosively and be connected to communication networks. Examples of objects connected to the network include vehicles, robots, drones, home appliances, displays, smart sensors installed in various infrastructures, construction machinery, and factory equipment. Mobile devices are expected to evolve into various form factors, such as augmented reality glasses, virtual reality headsets, and holographic devices. In the 6^{th} Generation (6G) era, efforts are being made to develop an improved 6G communication system to connect hundreds of billions of devices and objects and provide various services. For this reason, the 6G communication system is referred to as a system beyond 5G.

In the 6^{th} Generation (6G) communication system, which is predicted to be realized around 2030, a maximum transmission speed is tera (i.e., 1,000 giga) bit per second (bps), and the wireless latency is 100 microseconds (µsec). That is, compared to the 5G communication system, a transmission speed in the 6G communication system is 50 times faster, and the wireless latency is reduced to one-tenth.

To achieve such high data transmission speed and ultra-low latency, the 6G communication system is being considered for implementation in a Terahertz (THz) band (e.g., such 95 Gigahertz (GHz) to 3 THz). The Terahertz band is expected to place greater importance on technologies that ensure signal reach distance, that is, coverage, due to more serious path loss and atmospheric absorption phenomena compared to the millimeter-wave (mmWave) band introduced in 5G. As key technologies to ensure coverage, multiple antenna transmission technologies such as radio frequency (RF) components, antennas, a new waveform superior to orthogonal frequency division multiplexing (OFDM) in terms of coverage, beamforming, massive multiple-input and multiple-output (massive MIMO), full dimensional MIMO (FD-MIMO), array antenna, and large-scale antenna need to be developed. In addition, to improve a coverage of terahertz band signals, new technologies such as metamaterial-based lenses and antennas, high-dimensional spatial multiplexing technology using orbital angular momentum (OAM), and reconfigurable intelligent surface (RIS) are being discussed.

In order to improve frequency efficiency and enhance the system network, the 6G communication system is developing technologies such as a full duplex technology, which enables the uplink and downlink to utilize simultaneously the same frequency resources, a network technology that integrally utilizes satellites and high-altitude platform stations (HAPS), a network structure innovation technology that supports mobile base stations and enables network operation optimization and automation, a dynamic spectrum sharing technology through collision avoidance based on spectrum usage prediction, an artificial intelligence (AI)-based communication technology that realizes system optimization by internalizing an end-to-end AI support function and utilizing AI from a design stage, and a next-generation distributed computing technology that realizes services with complexities that exceed limits of terminal computing capabilities by utilizing ultra-high-performance communication and computing resources (e.g., Mobile Edge Computing (MEC), cloud, and the like). In addition, efforts are continuously being made to strengthen connectivity between devices, further optimize the network, promote the softwareization of network entities, and increase the openness of wireless communication through the design of new protocols to be used in the 6G communication system, the implementation of hardware-based security environments, the development of mechanisms for the safe utilization of data, and the development of technologies for maintaining privacy.

Due to the research and development of the 6G communication system, it is expected that the next hyper-connected experience will become possible through the hyper-connectivity of the 6G communication system, which includes not only interconnection between objects but also connections between humans and objects. Specifically, the 6G communication system is expected to enable the provision of services such as truly immersive eXtended Reality (XR), high-fidelity mobile hologram, and digital replica. In addition, services such as remote surgery, industrial automation, and emergency response will be provided through the 6G communication system with enhanced security and reliability, which will be applied in various fields such as industry, healthcare, automotive, and home appliances.

In 6G communication systems, the functions of the RAN are expected to be further segmented into service subscribers and service providers. In service-based networks, service subscription verification procedures for service subscription status will be applied in various functions.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to embodiments, a method performed by a first distributed unit (DU) is provided. The method may comprise transmitting, to a second DU via a communication interface between the first DU and the second DU, a setup request message. The method may comprise receiving, from the second DU, a setup response message. The setup request message may include a global ID of a base station of the first DU, first identification information of the first DU in the base station, and cell information of each of one or more first cells of the first DU. The setup response message may include a global ID of a base station of the second DU, second identification information of the second DU in the base station, and cell information of each of one or more second cells of the second DU.

According to embodiments, an electronic device for a first distributed unit (DU) is provided. The electronic device may comprise memory storing instructions. The instructions, when executed on the first DU, may cause the first DU to transmit, to a second DU via a communication interface between the first DU and the second DU, a setup request message. The instructions, when executed on the first DU, may cause the first DU to receive, from the second DU, a setup response message. The setup request message may include a global ID of a base station of the first DU, first identification information of the first DU in the base station, and cell information of each of one or more first cells of the first DU. The setup response message may include a global ID of a base station of the second DU, second identification information of the second DU in the base station, and cell information of each of one or more second cells of the second DU.

According to embodiments, an electronic device of a first distributed unit (DU) is provided. The electronic device may comprise memory, at least one processor, and at least one transceiver. The at least one processor may control the at least one transceiver to transmit, to a second DU through a communication interface between the first DU and the second DU, a setup request message. The at least one processor may control the at least one transceiver to receive a setup response message from the second DU. The setup request message may include a global ID for a base station of the first DU, first identification information of the first DU in the base station, and cell information of each of one or more first cells of the first DU. The setup response message may include a global ID for a base station of the second DU, second identification information of the second DU in the base station, and cell information of each of one or more second cells of the second DU.

### [Description of the Drawings]

The above and other aspects, features, and advantages of certain embodiments of the present disclosure will become more apparent from the following description taken in conjunction with the accompanying drawings.
FIGS. 1A to 1B illustrate examples of a wireless communication system.
FIGS. 2A to 2C illustrate examples of a spectrum aggregation environment.
FIG. 3 illustrates an example of a resource structure in a time domain and a frequency domain.
FIG. 4A illustrates an example of an architecture for an open radio access network (O-RAN).
FIG. 4B illustrates an example of network entities according to distributed deployment in O-RAN.
FIG. 5 illustrates an example of components of a distributed unit (DU).
FIGS. 6A and 6B illustrate an example of spectrum aggregation between DUs.
FIGS. 7A and 7B illustrate procedures of a base station and a terminal for CA.
FIG. 8 illustrates an example of an interface between DUs.
FIG. 9 illustrates an example of a setup procedure between DUs.
FIG. 10 illustrates an example of a configuration update procedure between DUs.
FIG. 11 illustrates an example of a removal procedure between DUs.
FIG. 12 illustrates signaling for configuring an interface between DUs.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

The terms referring to a signal (e.g., signal, information, message, signaling), terms referring to a resource (e.g., symbol, slot, subframe, radio frame, subcarrier, resource element (RE), resource block (RB), bandwidth part (BWP), occasion), terms referring to an operation state (e.g., step, operation, procedure), terms referring to data (e.g., packet, user stream, information, bit, symbol, codeword), terms referring to a channel, terms referring to network entities, terms referring to components of a device, and the like, used in the following description are exemplified for convenience of explanation. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments by using terms used in some communication standards (e.g., 3rd Generation Partnership Project (3GPP), extensible radio access network (xRAN), and open-radio access network (O-RAN)), but this is only an example for description. Various embodiments of the present disclosure may be easily modified and applied to other communication systems.

In the present disclosure, a signal quality may be, for example, at least one of a reference signal received power (RSRP), a beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), an error vector magnitude (EVM), a bit error rate (BER), and a block error rate (BLER). In addition to the above examples, other terms having equivalent technical meanings or other metrics indicating channel quality may also be used. Hereinafter, in the present disclosure, when the signal quality is high, it means that a signal quality value related to a signal strength is large or a signal quality value related to an error rate is small. The higher the signal quality, the smoother a wireless communication environment may be ensured. In addition, an optimal beam may mean a beam having the highest signal quality among beams.

Currently, discussions are underway for the improvement and enhancement of the initial 5G mobile communication technology, considering services that the 5G mobile communication technology aimed to support, and physical layer standardization is in progress for technologies such as Vehicle-to-Everything (V2X), which assists driving decisions of autonomous driving vehicles based on their location and state information transmitted by the vehicle and enhances user convenience, New Radio Unlicensed (NR-U), which aims for system operation compliant with various regulatory requirements in unlicensed frequency bands, technology for reducing power consumption of NR terminals (UE Power Saving technology), Non-Terrestrial Network (NTN), which enables direct terminal-to-satellite communication for securing coverage in areas where communication with a terrestrial network is unavailable, and Positioning.

In addition, standardization in the field of wireless interface architecture/protocols is also in progress for technologies such as an Industrial Internet of Things (IIoT) for supporting new services through connection and convergence with other industries, an Integrated Access and Backhaul (IAB) providing nodes for expanding network service areas by integrally supporting wireless backhaul links and access links, Mobility Enhancement technologies including Conditional Handover and Dual Active Protocol Stack (DAPS) handover, and a 2-step random access (2-step RACH for NR) simplifying a random access procedure, and furthermore, standardization in the field of system architecture/services is also in progress for a 5G baseline architecture (e.g., a Service-Based Architecture, a Service-Based Interface) for applying Network Functions Virtualization (NFV) and Software-Defined Networking (SDN) technologies, and Mobile Edge Computing (MEC) that receives services based on a location of a terminal.

When such a 5G mobile communication system is commercialized, a rapidly increasing number of connected devices will be connected to communication networks, and accordingly, it is expected that enhancement of the functions and performance of the 5G mobile communication system and integrated operation of the connected devices will be required. To this end, new studies are to be conducted on eXtended Reality (XR) for efficiently supporting Augmented Reality (AR), Virtual Reality (VR), and Mixed Reality (MR), 5G performance improvement and complexity reduction using Artificial Intelligence (AI) and Machine Learning (ML), and AI service support, metaverse service support, and drone communications.

Furthermore, the advancement of such 5G mobile communication system could serve as the foundation for the development of technologies such as not only a new waveform to ensure coverage in the terahertz band of the 6G mobile communication technology, Multiple antenna transmission technologies such as Full dimensional MIMO (FD-MIMO), array antenna, and large-scale antenna, high-dimensional spatial multiplexing technology using metamaterial-based lenses and antennas and Orbital Angular Momentum (OAM) to improve coverage of terahertz band signals, and a Reconfigurable Intelligent Surface (RIS) technology, but also a full duplex technology, which enables the uplink and downlink to utilize simultaneously the same frequency resources, an artificial intelligence (AI)-based communication technology that realizes system optimization, by internalizing an end-to-end AI support function and utilizing satellite and AI from a design stage, and a next-generation distributed computing technology that realizes services with complexities that exceed limits of terminal computing capabilities by utilizing ultra-high-performance communication and computing resources.

Although 4G and/or 5G environments are illustrated as an example, this description does not limit the scope of the communication environments of the embodiments of the present disclosure. The technical principles according to the embodiments of the present disclosure may also be applied to 6G and post-6G communication technologies and network environments.

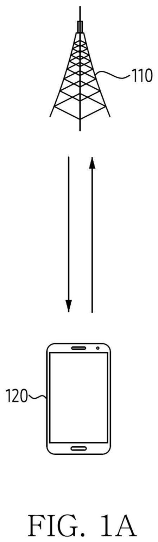

FIGS. 1A to 1B illustrate examples of a wireless communication system.

Referring to FIG. 1A, FIG. 1A illustrates a base station 110 and a terminal 120 as a portion of nodes that utilize a wireless channel in a wireless communication system. FIG. 1A illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1A, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

The terminal 120 may be configured with cells of the base station 110 through carrier aggregation (CA). The CA technology is a technology that increases frequency utilization efficiency of the terminal 120 and the base station 110 by connecting the terminal to homogeneous wireless communication cell groups having a common radio resource control entity and simultaneously using frequency resources on component carriers of respective cells located in different frequency bands for signal transmission and reception. The cells configured for CA may include one a primary cell (PCell) and one or more secondary cells (SCells).

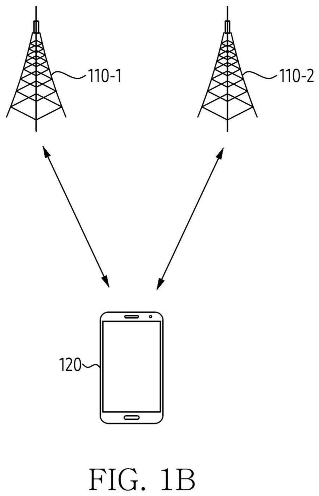

Referring to FIG. 1B, the terminal 120 may be configured in dual connectivity (DC) using the first base station 110-1 and the second base station 110-2. The DC technology is a technology that increases frequency utilization efficiency by allowing the terminal to simultaneously connect to two independent heterogeneous or homogeneous wireless communication cell groups having separate radio resource control entities and using frequency resources on component carriers of cells within respective cell groups located in different frequency bands for signal transmission and reception. It is a technology that the terminal 120 is connected to two different radio resource entities (e.g., the first base station 110-1 and the second base station 110-2) for using radio resources allocated by each radio resource entity. In MR-DC, a UE (e.g., the terminal 120) in a radio resource control (RRC) connected state (i.e., RRC_CONNECTED) may be configured to use radio resources provided by two independent schedulers. Each scheduler may be located in an NG-RAN node (e.g., the first base station 110-1 or the second base station 110-2). Herein, a node is a master node (MN), and another node is a secondary node (SN). The MN and SN are connected through a network interface, and the MN may be connected to a core network. The SN may or may not be connected to the core network.

The MN may provide a master cell group (MCG). The MN may be referred to as an M-NODE or M-NG-RAN node in addition to the MN. The MCG may include one or more cells. The MCG may include a primary cell (PCell). The MCG may include a plurality of aggregated cells. The MCG may include the PCell and one or more secondary cells (SCells). The SN may provide a secondary cell group (SCG). The SN may be referred to as an S-NODE or S-NG-RAN node in addition to the SN. The SCG may include one or more cells. The SCG may include a plurality of aggregated cells. The SCG may include a PCell and/or a SCell like the MCG. A cell functioning as a PCell within the SCG may be referred to as a primary secondary cell (PSCell). The sub-cell group may include a PSCell and one or more SCells. Hereinafter, as a term including PCell and PSCell, a special cell (SpCell) may be used. The Spcell means a primary cell of the MCG or SCG. In other words, the SpCell of the MCG indicates the PCell, and the SpCell of the SCG indicates the SCell.

The possible types of DCs may be defined as follows.
1) EN-DC: A dual connection in which an eNB is connected to an evolved packet core (EPC), and a terminal is connected to an eNB acting as an MN and an gNB acting as an SN. Here, the gNB may be referred to as an en-gNB, and the en-gNB may or may not be connected to the EPC.
2) NGEN-DC: A dual connection in which an eNB is connected to a 5G core (5GC), and a terminal is connected to an eNB acting as an MN and a gNB acting as an SN. Here, the eNB may be referred to as an ng-eNB.
3) NE-DC: A dual connection in which a gNB is connected to a 5GC, and a terminal is connected to a gNB acting as an MN and an eNB acting as an SN. Here, the eNB may be referred to as an ng-eNB.
4) NR-DC: A dual connection in which a gNB is connected to a 5GC, and a terminal is connected to a gNB acting as an MN and a gNB acting as an SN. The NR-DC may be used even when the UE is connected to a single gNB and performs both the role of MN and SN and configures both MCG and SCG.

The terminal 120 may support multi-radio (MR)-DC. The terminal 120 may be connected to the first base station 110-1 and the second base station 110-2. The first base station 110-1, which is an MN, and the second base station 110-2, which is an SN, may be connected to a terminal. DC technology may provide a higher data rate together with carrier aggregation (CA) provided in each base station. The first base station 110-1 and the second base station 110-2 may transmit downlink traffic to the terminal 120 or receive uplink traffic from the terminal 120 as MN and SN, respectively.

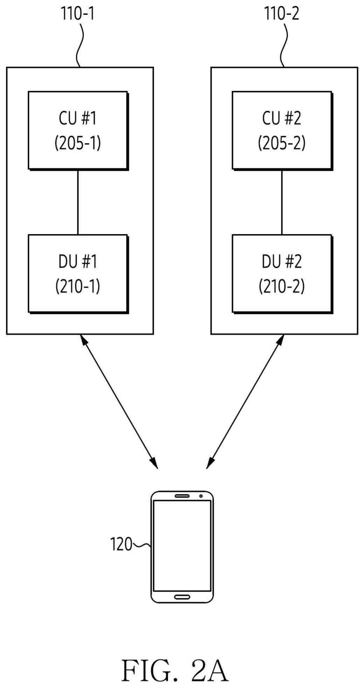

FIGS. 2A to 2C illustrate examples of a spectrum aggregation environment. The spectrum aggregation refers to a wireless communication technology using a certain frequency interval in a frequency domain and another frequency interval different from the frequency interval together. The frequency interval may correspond to at least one of a resource block (RB), a bandwidth part (BWP), a bandwidth, a cell, a cell group, a frequency band, and/or a frequency range, according to the technology used. For example, the spectrum aggregation may include CA. The bandwidth of a primary cell (PCell) and the bandwidth of a secondary cell (SCell) may be used together for data communication. For example, the spectrum aggregation may include DC. A frequency domain occupied by a cell of the MCG of the MN and a frequency domain occupied by a cell of the SCG of the SN may be used together for communication. For example, the spectrum aggregation may include CoMP. Base stations having different frequency spectrums may be used for data communication. For example, the spectrum aggregation may include a multi (M)-transmission reception point (TRP). Resources allocated in different frequency domains may be used for data transmission.

A cell may refer to an area (or coverage) capable of being covered by one base station (e.g., gNB) (or one DU). The cell may indicate not only a geographical area but also an area occupying a specific spectrum in a frequency domain. The DU may cover one cell or may cover multiple cells. Here, the multiple cells may be distinguished by a frequency supported or an area of a sector covered. A serving cell, which provides higher-layer signaling (e.g., radio resource control (RRC) signaling) with a terminal, may refer to one cell or multiple cells. When the terminal 120 is not configured to support carrier aggregation (CA) and dual connectivity (DC), the serving cell may be one cell corresponding to a PCell. When the terminal 120 is configured to support CA or DC, the serving cell may be a set of cells including the PCell and one or more SCells.

Referring to FIG. 2A, a base station may be separated into a CU and a DU. For example, when the base station corresponds to a gNB, the CU is a logical node that hosts RRC, service data adaptation protocol (SDAP), and packet data convergence protocol (PDCP) of the base station. The CU and the DU may be connected through an F1 interface. The DU is a logical node that hosts a radio link control (RLC) layer, a medium access control (MAC) layer, and a physical (PHY) layer. The DU may support one or more cells, and a cell may be supported by only one DU. The first base station 110-1 may include a CU #1 205-1 and a DU #1 210-1. The DU #1 210-1 may provide one or more cells. The second base station 110-2 may include a CU #2 205-2 and a DU #2 210-2. The DU #2 210-2 may provide one or more cells. For example, for DC operation, an MgNB-DU may indicate a gNB-DU (e.g., the DU #1 210-1) of a gNB or an en-gNB acting as a master node, and an SgNB-DU may represent a gNB-DU (e.g., the DU #2 210-2) of a gNB or an en-gNB serving as a secondary node.

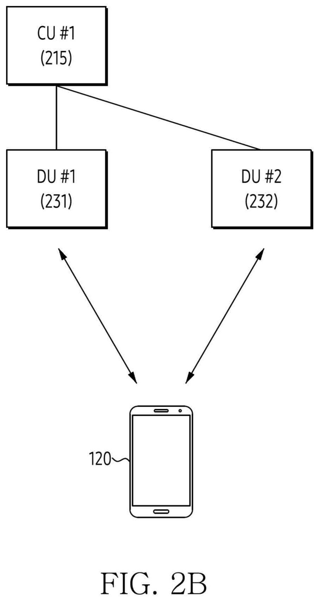

Referring to FIG. 2B, a base station may be separated into a CU and a DU. Unlike a case where multiple independent base stations (e.g., the first base station 110-1 and the second base station 110-2) serve the terminal 120, one CU and multiple DUs may serve the terminal 120. For example, the CU #1 215 may be connected to the DU #1 231 and the DU #2 232. The CU #1 215 may be connected to each of the DU #1 231 and the DU #2 232 through an F1 interface. The DU #1 231 may provide one or more cells. The DU #2 232 may provide one or more cells. For example, for CA operation, the DU #1 231 may provide a cell corresponding to a PCell. The DU #2 232 may provide a cell corresponding to an SCell. Two cells may be configured for the terminal 120.

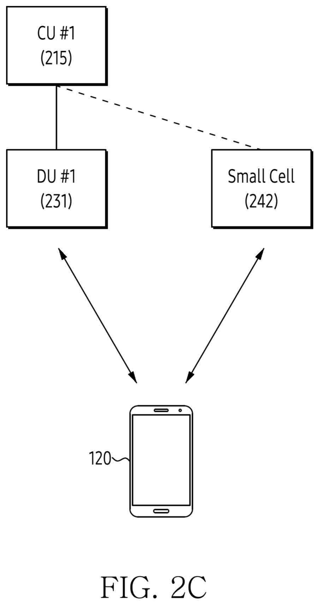

Referring to FIG. 2C, a base station may be separated into a CU and a DU. In addition to a distributed deployment separated into the CU and the DU, a base station 242 for small cells may additionally be deployed. For example, the CU #1 215 may be connected to the DU #1 231 through an F1 interface. The base station 242, as an independent base station, may perform communication with the CU #1 215. The DU #1 231 may provide one or more cells. The base station 242 may provide one or more small cells. For example, for CA operation, the DU #1 231 may provide a cell corresponding to a PCell. The DU #2 232 may provide a cell corresponding to an SCell. Two cells may be configured for the terminal 120.

Vendors of the DUs (or the DU and a base station of the small cell) may be different from each other. Frequency intervals used among multi-vendors may not satisfy compatibility with each other. For example, a vendor of a first DU and a vendor of a second DU may have purchased different frequency bands from each other. A frequency domain occupied by a cell provided by the first DU may be different from a frequency domain occupied by a cell provided by the second DU. Since the second DU cannot accurately know information regarding the cell of the first DU, it may be difficult to configure CA between the two cells. If CA of the two cells is configured, signaling through a CU or a higher entity is required because there is no interface between the first DU and the second DU. However, an increase in signaling causes delay, and thus efficient resource management may be difficult.

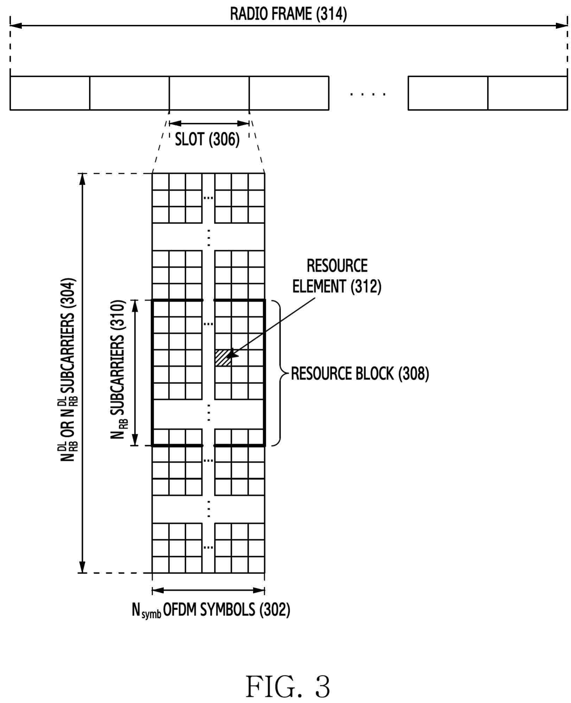

Hereinafter, embodiments of the present disclosure describe new interfaces and procedures and messages for configuring the interfaces for spectrum aggregation, such as the CA or the DC described above. First, resources in a physical layer are described with reference to FIG. 3.

FIG. 3 illustrates an example of a resource structure in a time domain and a frequency domain. FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an orthogonal frequency division multiplexing (OFDM) symbol, and Nsymb OFDM symbols 302 are gathered to form one slot 306. A length of the slot is defined as 1.0 ms, and a length of a radio frame 314 is defined as 10 ms. A minimum transmission unit in the frequency domain is a subcarrier, and a carrier bandwidth configuring a resource grid may be configured with NBW subcarriers 304.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as Nsymb consecutive OFDM symbols in the time domain and NSCRB consecutive subcarriers in the frequency domain. In an NR system, a resource block (RB) 308 may be defined as NSCRB consecutive subcarriers 310 in the frequency domain. One RB 308 includes NSCRB REs 312 on a frequency axis. In general, a minimum unit of transmission of data is RB and the number of subcarriers is NSCRB=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

**[Table 1]**

| Channel Bandwidth [MHz] | SCS | 5 | 10 | 20 | 50 | 80 | 100 |
|---|---|---|---|---|---|---|---|
| Transmission Bandwidth Configuration NRB | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |

**[Table 2]**

| Channel Bandwidth [MHz] | SCS | 50 | 100 | 200 | 400 |
|---|---|---|---|---|---|
| Transmission Bandwidth Configuration N_{RB} | 60kHz | 66 | 132 | 264 | N/A |
| | 120kHz | 32 | 66 | 132 | 264 |

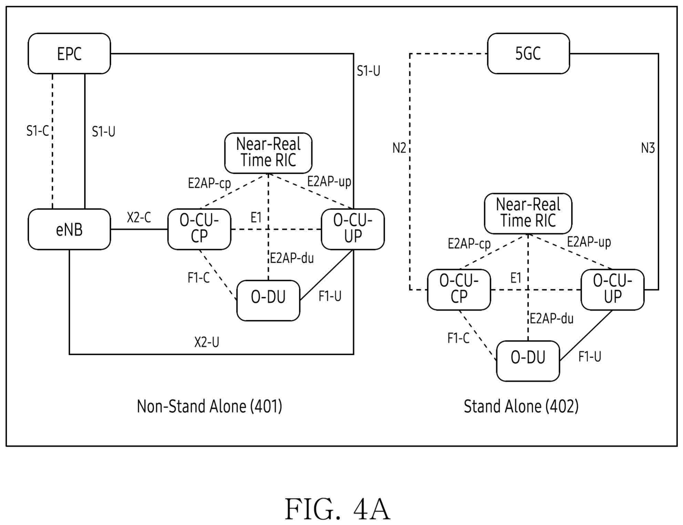

FIG. 4A illustrates an example of an architecture for an open radio access network (O-RAN). As 4^{th} generation (4G)/5^{th} generation (5G) communication systems (e.g., new radio (NR)) are commercialized, differentiated service support for users in a virtualized network has been required. The 3GPP is a joint research project among organizations related to mobile communication, and aims to prepare globally applicable specifications for 3rd generation mobile communication systems within the scope of the IMT-2000 project of the International Telecommunication Union (ITU). The 3GPP was established in December 1998, and the 3GPP specifications are based on advanced GSM specifications, and include radio, core network, and service architecture in their standardization scope. Accordingly, the open radio access network (O-RAN) newly defines 3GPP network entity (NE) and nodes configuring a base station, that is, a radio unit (RU), a digital unit (DU), a central unit (CU)-control plane (CP), and a CU-user plane (UP), respectively as an O-RAN (O)-RU, an O-DU, an O-CU-CP, and an O-CU-UP, and additionally standardizes an near-real-time (NRT) radio access network intelligent controller (RIC). Here, the O-RU, the O-DU, the O-CU-CP, and the O-CU-UP may be understood as objects configuring an RAN capable of operating according to the O-RAN specifications, and may be referred to as E2 nodes. An interface between the RIC (e.g., a Near-RT RIC) and the E2 nodes and the objects configuring an RAN capable of operating according to the O-RAN specifications uses an E2AP(application protocol).

Referring to FIG. 4A, according to an embodiment, as a wireless communication system in the O-RAN, network entities according to an NSA mode 401 may be configured. In a deployment according to the NSA mode 401, an eNB is connected to an EPC through an S1-C/S1-U interface and connected to an O-CU-CP through an X2 interface. According to an embodiment, as a wireless communication system in the O-RAN, network entities according to an SA mode 402 may be configured. In a deployment according to the SA mode 402, the O-CU-CP may be connected to a 5G core (5GC) through an N2/N3 interface.

A Near-real time (RT) RIC is a logical node capable of collecting information at a cell site where a terminal and an O-DU, an O-CU-CP, or an O-CU-UP transmit and receive signals. The Near-RT RIC may be implemented in a form of a server intensively deployed in one physical location. A connection may be made through Ethernet between the O-DU and the Near-RT RIC, between the O-CU-CP and the Near-RT RIC, and between the O-CU-UP and the Near-RT RIC. To this end, interface specifications for communication between the O-DU and the Near-RT RIC, between the O-CU-CP and the Near-RT RIC, and between the O-CU-UP and the Near-RT RIC are required, and definitions of message specifications such as E2-DU, E2-CU-CP, and E2-CU-UP and procedures between the O-DU, the O-CU-CP, the O-CU-UP, and the Near-RT RIC are required. In particular, differentiated service support for users is required in a virtualized network, and functional definitions of messages of the E2-DU, the E2-CU-CP, and the E2-CU-UP are required to support services for extensive cell coverage by concentrating call processing messages/functions occurring in the O-RAN into the Near-RT RIC.

The Near-RT RIC may perform communication with the O-DU, the O-CU-CP, and the O-CU-UP by using an E2 interface, and may set event occurrence conditions by generating and transmitting a subscription message. For example, the Near-RT RIC may generate an E2 subscription request message and deliver it to an E2 node (e.g., the O-CU-CP, the O-CU-UP, or the O-DU) to set up a call processing event. In addition, after the event is set, the E2 node transmits a subscription request response message to the Near-RT RIC. The E2 node may transmit a current state to the Near-RT RIC through an E2 indication/report. The Near-RT RIC may provide control for the O-DU, the O-CU-CP, and the O-CU-UP by using an E2 control message.

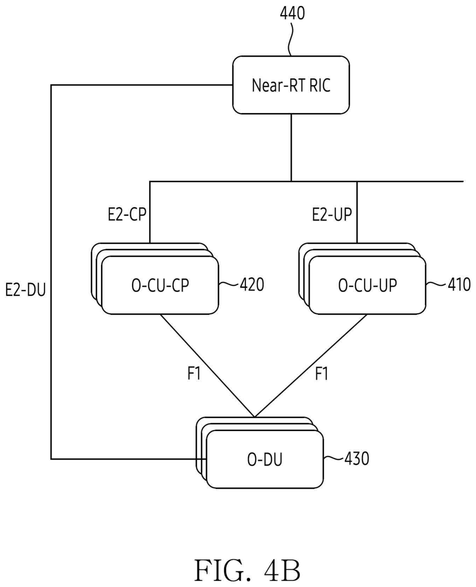

FIG. 4B illustrates an example of network entities according to distributed deployment in O-RAN.

Referring to FIG. 4B, a base station 110 may be distributed into multiple network entities defined on the O-RAN specifications. For example, the base station 110 may include an O-CU-UP 410, an O-CU-CP 420, and/or an O-DU 430. A Near-RT RIC 440 is connected to the O-CU-CP 420, the O-CU-UP 410, and the O-DU 430. The Near-RT RIC 440 is a device for customizing RAN functionality for new services or regional resource optimization. The Near-RT RIC 440 may provide functions such as network intelligence (e.g., policy enforcement, handover optimization), resource assurance (e.g., radio-link management, advanced self-organized-network (SON)), and resource control (e.g., load balancing, slicing policy). The Near-RT RIC 440 may perform communication with the O-CU-CP 420, the O-CU-UP 410, and the O-DU 430. The Near-RT RIC 440 may be connectable to each node through E2-CP, E2-UP, and E2-DU interfaces. In addition, interfaces between the O-CU-CP and the DU and between the O-CU-UP and the DU may be referred to as an F1 interface. In the following description, the DU and the O-DU, the CU-CP and the O-CU-CP, and the CU-UP and the O-CU-UP may be used interchangeably.

Although one Near-RT RIC 440 is exemplified in FIG. 4B, according to various embodiments, multiple RICs may exist. The multiple RICs may be implemented as multiple hardware located at the same physical location or may be implemented through virtualization using one hardware.

In a communication system in which a base station has a relatively large cell radius, each base station is installed to include functions of a digital processing unit (or a distributed unit (DU)) and a (radio frequency (RF) processing unit (or a radio unit (RU)). As higher frequency bands are used in 4G (4th generation) and/or later communication systems (e.g., 5G) and a cell coverage of a base station becomes smaller, the number of base stations for covering a specific area has increased. The installation cost burden of operators for installing base stations has also increased. To minimize the installation cost of the base station, a deployment may be assumed in which a DU (e.g., the O-DU 430) of the base station 110 and an RU (e.g., the O-RU) are separated and one or more RUs are connected to one DU through a wired network. In FIGS. 4A to 4B, the O-DU 430 is described as an entity providing a cell to the terminal 120, but the O-DU 430 providing the cell may include that one or more RUs, which are connected to the O-DU 430 and geographically distributed to cover multiple areas, provide coverage.

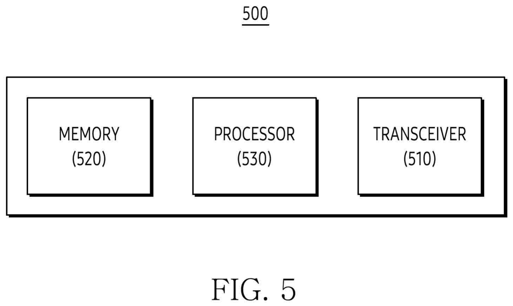

FIG. 5 illustrates an example of components of a distributed unit (DU).

FIG. 5 illustrates a configuration of a device according to embodiments of the present disclosure. The structure illustrated in FIG. 5 may be understood as a configuration of a device having at least one function of the Near-RT RIC, the non-RT RIC, the O-CU-CP, the O-CU-UP, or the O-DU described above. Terms such as "...unit" or "...device" used below refer to units that process at least one function or operation, and may be implemented by hardware, software, or a combination of hardware and software.

Referring to FIG. 5, a device may include a transceiver 510, memory 520, and a processor 530.

The transceiver 510 provides an interface for performing communication with other devices in a network. That is, the transceiver 510 converts a bitstream transmitted from a device to another device into a physical signal and converts a physical signal received from another device into a bitstream. That is, the transceiver 510 may transmit or receive a signal. Accordingly, the transceiver 510 may be referred to as a modem, a communication unit, a transmit unit, a receive unit, or a transmit/receive unit. In this case, the transceiver 510 allows the device to communicate with other devices or systems through a backhaul connection (e.g., a wired backhaul or a wireless backhaul) or through a network. The transceiver 510 may include one or more transceivers.

The memory 520 stores data such as a basic program, an application program, and setting information for operation of the device. The memory 520 may be configured with a volatile memory, a non-volatile memory, or a combination of the volatile memory and the non-volatile memory. The memory 520 provides stored data according to a request of the processor 530. The memory 520 may be referred to as a storage unit.

The processor 530 controls overall operations of the device. For example, the processor 530 transmits and receives a signal through the transceiver 510. In addition, the processor 530 writes and reads data in the memory 520. The processor 530 may be referred to as a control unit. To this end, the processor 530 may be configured with a plurality of processors or may include at least one sub-processor. According to various embodiments, the processor 530 may control the device to perform operations according to various embodiments described in the present disclosure.

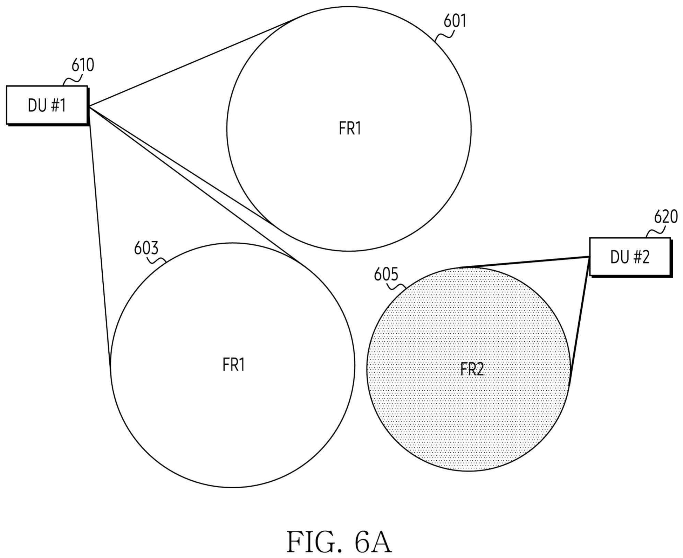

FIGS. 6A to 6B illustrate examples of spectrum aggregation between DUs. For example, the DUs may include DU (e.g., the DU #1 210-1, the DU #2 210-2, the DU #1 231, and the DU #2 232), described in FIGS. 2A to 2C, supporting a protocol of an RLC layer and a protocol of a MAC layer. For example, the DUs may include the O-DU 430 described in FIGS. 4A to 4B.

Referring to FIG. 6A, a DU #1 610 may serve a terminal (e.g., the terminal 120). The DU #1 610 may provide a first cell 601 and a second cell 603 to the terminal 120. For example, the first cell 601 may be a cell of a first frequency band of a frequency range (FR) #1. The second cell 603 may be a cell of a second frequency band of the FR #1. The FR #1 of 3GPP NR indicates a range from 410 megahertz (MHz) to 7125 MHz. An operator may newly purchase a frequency band of an FR #2. The FR #2 of 3GPP NR indicates a range from 24.25 gigahertz (GHz) to 52.6 GHz (which may be increased to 71 GHz or higher in the future). A DU #2 620 supporting a frequency band of the FR #2 may serve the terminal 120. However, since an interface between the DU #1 610 and the DU #2 620 is not currently defined, a third cell 605 of the frequency band of the FR #2 may have difficulty supporting carrier aggregation (CA) with the first cell 601 and/or the second cell 603.

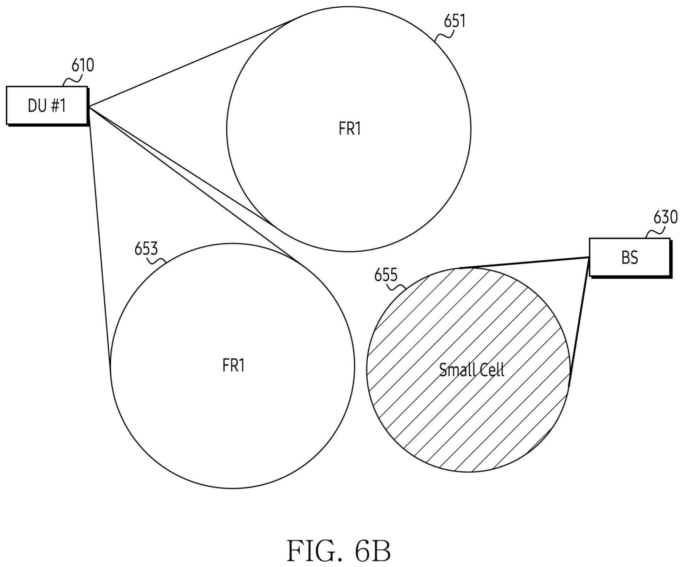

Referring to FIG. 6B, a DU #1 610 may serve a terminal (e.g., the terminal 120). The DU #1 610 may provide a first cell 601 and a second cell 603 to the terminal 120. For example, the first cell 601 may be a cell of a first frequency band of an FR #1. The second cell 603 may be a cell of a second frequency band of the FR #1. An operator may newly purchase a small cell (or a femto cell or a pico cell). A base station 630 supporting the small cell may serve the terminal 120. Unlike a distributed base station divided into CU-DU, the base station 630 may be implemented as one entity providing the small cell. Since an interface between the DU #1 610 and the base station 630 is not defined, a third cell 605 of the frequency band of the FR #2 may have difficulty supporting carrier aggregation (CA) with the first cell 601 and/or the second cell 603.

Currently, communication protocols defined in the O-RAN specifications or the 3GPP do not define interfaces between a DU and a base station or between DUs. However, as communication technologies advance, the number of network entities increases, and performing communication with an external node (e.g., a base station or another DU) through a CU causes delay, so it is necessary to define an interface between DUs or between a DU and a base station. Hereinafter, embodiments of the present disclosure describe new interfaces and procedures and messages for configuring the interfaces for spectrum aggregation, such as the CA described above. Hereinafter, procedures and messages related to an interface between the DU #1 610 and the DU #2 620 are described, but the descriptions may also be applied in the same or similar manner to an interface between the DU #1 610 and the base station 630.

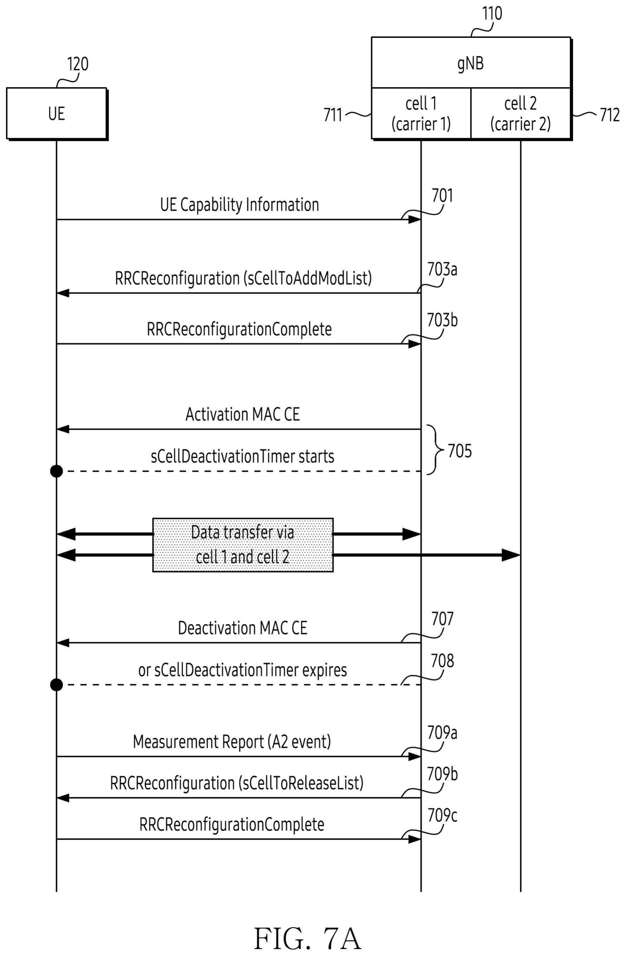

FIGS. 7A to 7B illustrate procedures of a base station 110 (e.g., the gNB) and a terminal 120 (e.g., the UE) for CA. In FIGS. 7A to 7B, procedures and protocols required for an SCell of the CA are described. For CA, a MAC scheduler of the base station 110 may support multiple carrier components. For example, the base station 110 may provide a first cell 711 and a second cell 712. Hereinafter, a situation in which only the first cell 711 is configured and activated in the terminal 120 is assumed.

Referring to FIG. 7A, in operation 701, the terminal 120 may transmit a UE capability information message to the base station 110. The UE capability information message may be transmitted through RRC signaling. The UE capability information message may be transmitted on a first cell 711 that is a PCell. The UE capability information message may include information indicating whether the terminal 120 may support CA for the first cell 711 and the second cell 712. For example, the UE capability information message including information indicating that the terminal 120 may support CA for the first cell 711 and the second cell 712 may be transmitted to the base station 110.

In operation 703a, the base station 110 may transmit an RRC reconfiguration message to the terminal 120. The RRC reconfiguration message may include information regarding an SCell to be added. For example, the RRC reconfiguration message may include an 'sCellToAddModList' IE. The 'sCellToAddModList' IE may include configuration information regarding the second cell 712. The second cell 712 as well as the first cell 711 may be configured for the terminal 120. Thereafter, in operation 703b, the terminal 120 may transmit an RRC reconfiguration complete message.

In operation 705a, the base station 110 may transmit a medium access control (MAC) control element (CE) for SCell activation to the terminal 120. For example, the base station 110 may transmit the MAC CE to the terminal 120 to activate the second cell 712. In operation 705b, a timer for deactivation of the SCell may be started. For example, when the second cell 712 is activated, a deactivation timer may be started. For example, the terminal 120 may start the timer according to a set time (e.g., 20 ms, 40 ms, 80 ms, 160 ms, ...) of an 'sCellDeactivationTimer' IE configured through an RRC message. When the timer expires, the activated second cell 712 may be deactivated.

When the second cell 712 is activated, the terminal 120 may use two activated cells. Through the first cell 711 and the second cell 712, the terminal 120 may perform data communication with a base station. Through a bandwidth (or BWP) of the first cell 711 and a bandwidth of the second cell 712, uplink and/or downlink data throughput may be increased. Thereafter, if a MAC CE for SCell deactivation is received as in operation 707 or the above-described timer expires as in operation 708, the SCell may be deactivated. For example, if a deactivation MAC CE indicating the second cell 712 is received from the base station 110, or a timer associated with the second cell 712 expires, the second cell 712 may be deactivated. The terminal 120 may have difficulty performing communication with the base station 110 through the second cell 712.

Even if the second cell 712 is deactivated, the second cell 712 remains in a configured state for the terminal 120. Separate RRC signaling may be required to release the configured second cell 712. According to an embodiment, the terminal 120 may identify whether quality (e.g., RSRP) of the second cell 712 becomes lower than a threshold value. For example, the terminal 120 may identify whether the second cell 712 satisfies an A2 event ("serving becomes worse than threshold"). In operation 709a, in a case that the quality of the second cell 712 is less than the threshold value, the terminal 120 may transmit a measurement report to the base station 110.

In operation 709b, the base station 110 may transmit an RRC reconfiguration message to the terminal 120. The RRC reconfiguration message may include information regarding an SCell to be released. For example, the RRC reconfiguration message may include an 'sCellToReleasedList' IE. The 'sCellToReleasedList' IE may include identification information (e.g., an SCell index of the second cell 712) regarding the second cell 712. As the second cell 712 of the terminal 120 is released, the first cell 711 may be used as a serving cell of the terminal 120. Thereafter, in operation 709c, the terminal 120 may transmit an RRC reconfiguration complete message.

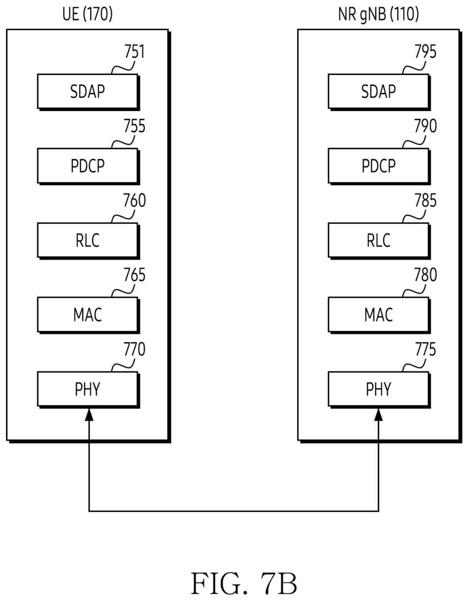

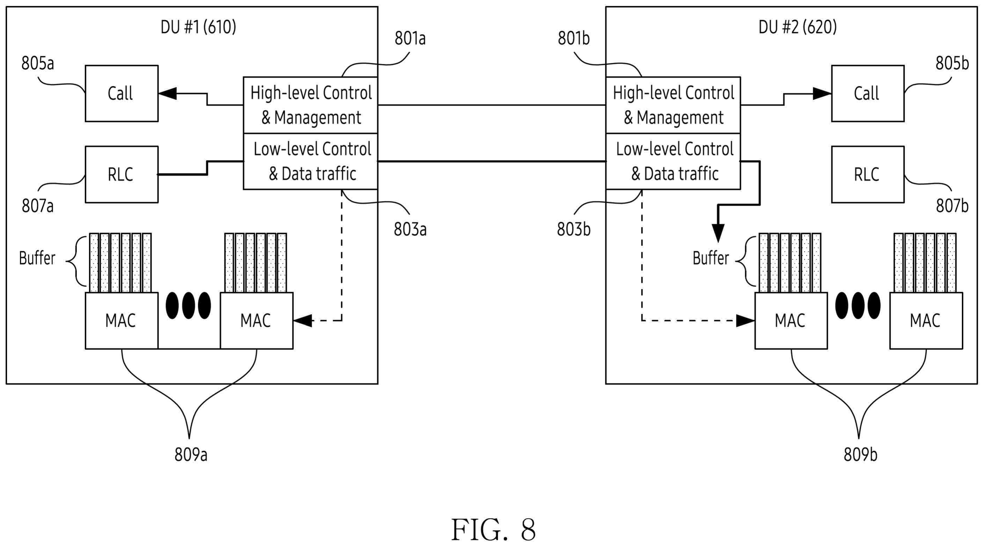

To configure the above-described procedures between the DU for the first cell 711 and the DU for the second cell 712, procedures of FIGS. 8 to 12 are described. In addition, to explain an interface between the DUs, protocols defined in the 3GPP specifications are described through FIG. 7B.

In FIG. 7B, radio protocols required for the above-described CA are described. Referring to FIG. 7B, radio protocols of an NR communication system is configured with service data adaptation protocol (SDAP) 751 and 795, PDCP 755 and 790, RLC 760 and 785, MAC 765 and 780, and PHY 770 and 785 in the terminal 120 and the base station 110 (e.g., a gNB), respectively.

Main functions of the SDAPs 751 and 795 may include some of the following functions.
- transfer of user plane data
- mapping between a QoS flow and a DRB for both DL and UL
- marking QoS flow ID in both DL and UL packets
- reflective QoS flow to DRB mapping for the UL SDAP PDUs

For an SDAP layer, the terminal 120 may be configured through a radio resource control (RRC) message whether to use a header of the SDAP layer or whether to use a function of the SDAP layer for each PDCP layer, for each bearer, or for each logical channel. In a case that the SDAP header is configured, the terminal 120 may instruct, through a non-access stratum (NAS) Quality of Service (QoS) reflection configuration 1-bit indicator (NAS reflective QoS) and an access stratum (AS) QoS reflection configuration 1-bit indicator (AS reflective QoS) of the SDAP header, to update or reset mapping information for QoS flows and data bearers of uplink and downlink. The SDAP header may include QoS flow ID information indicating QoS. The QoS information may be used as data processing priority to support smooth services and scheduling information.

Main functions of the PDCPs 755 and 790 may include some of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above description, a reordering function of a PDCP layer may mean a function of reordering PDCP PDUs received from a lower layer in order based on PDCP sequence number (SN). The reordering function of the PDCP layer may include a function of delivering data to an upper layer in the reordered order, a function of delivering data immediately without considering the order, a function of recording lost PDCP PDUs by reordering the order, a function of transmitting a status report for the lost PDCP PDUs to a transmitting side, and a function of requesting retransmission for the lost PDCP PDUs.

Main functions of the RLCs 760 and 785 may include some of the following functions.
- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, the in-sequence delivery function of the RLC layer may mean a function of delivering RLC SDUs received from a lower layer to an upper layer in order. In a case that one RLC SDU originally is divided into multiple RLC SDUs and received, the in-sequence delivery function of the RLC layer may include a function of reassembling and delivering them.

The in-sequence delivery function of the RLC layer may include a function of reordering received RLC PDUs based on RLC sequence number (SN) or PDCP sequence number (SN), a function of recording lost RLC PDUs by reordering the order, a function of transmitting a status report for the lost RLC PDUs to a transmitting side, and a function of requesting retransmission for the lost RLC PDUs.

In a case that there is a lost RLC SDU, the in-sequence delivery function of the RLCs 760 and 785 may include a function of delivering only RLC SDUs before the lost RLC SDU to an upper layer in order. In addition, in a case that a predetermined timer expires even though there is a lost RLC SDU, the in-sequence delivery function of the RLC layer may include a function of delivering all RLC SDUs received before a timer is started to an upper layer in order. In addition, in a case that a predetermined timer expires even though there is a lost RLC SDU, the in-sequence delivery function of the RLC layer may include a function of delivering all RLC SDUs received up to the present to an upper layer in order.

The RLC layer 760 and 785 may process RLC PDUs in the order in which they are received regardless of a sequence of sequence numbers (out-of-sequence delivery) and deliver them to PDCP device 405 and 440.

In a case that the RLC layer 760 and 785 receive segments, they may receive segments stored in a buffer or segments to be received later, reconstruct them into one complete RLC PDU, and deliver it to the PDCP device.

The RLC layer may not include a concatenation function, and may perform a function in the MAC layer or may replace it with a function of multiplexing in the MAC layer.

In the above description, the out-of-sequence delivery function of the RLC layer may mean a function of immediately delivering RLC SDUs received from a lower layer to an upper layer regardless of the order. The out-of-sequence delivery function of the RLC layer may include a function of reassembling and delivering, in a case that one RLC SDU originally is divided into multiple RLC SDUs and received, them. The out-of-sequence delivery function of the RLC layer may include a function of storing RLC SN or PDCP SN of received RLC PDUs and recording lost RLC PDUs by sorting the order.

The MACs 765 and 780 may be connected to multiple RLC layers configured in one terminal, and a main function of the MACs may include some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The PHY layers 760 and 775 may perform operations of channel-coding and modulating upper-layer data, making it OFDM symbols and transmitting them to a radio channel, or demodulating OFDM symbols received through the radio channel and performing channel decoding for delivering them to an upper layer.

Although a radio protocol of an NR communication system have been described as an example in a radio access network, embodiments of the present disclosure are not limited thereto. For example, in an LTE communication system, a DU may also be defined (e.g., eNB-DU), and in such a case, the SDAPs 751 and 795 may be omitted. As embodiments of the present disclosure provide procedures of interfaces between DUs or between DUs and a base station (e.g., eNB or gNB) for spectrum aggregation applicable to 4G, 5G, and/or 6G systems, various types of layers or protocols other than the communication protocols of FIG. 7B may be used.

FIG. 8 illustrates an example of an interface between DUs. For example, the DUs may include a DU (e.g., the DU #1 210-1, the DU #2 210-2, the DU #1 231, and the DU #2 232), described in FIGS. 2A to 2C, supporting a protocol of an RLC layer and a protocol of a MAC layer. For example, the DUs may include the O-DU 430 described in FIGS. 4A to 4B. An F2 interface may be configured between a DU #1 610 and a DU #2 620. Meanwhile, the F2 interface may alternatively be referred to by another term (e.g., M1, F3, MV, or XD) having the same technical meaning, as an interface between DUs. Since the DU is responsible for the MAC layer, it may perform scheduling operations in the MAC layer. In a scenario divided into two DUs (e.g., in the deployment scenarios of FIG. 2A, FIG. 2B, or FIG. 2C), scheduling efficiency may be achieved by transmitting and/or receiving parameters for scheduling through an interface between the DUs. Hereinafter, in FIG. 8, elements for interface management between the DU #1 610 and the DU #2 620 are described.

Referring to FIG. 8, the DU #1 610 may include a high-level control management unit 801a. For example, the high-level control management unit 801a may include a streaming control transmission protocol (SCTP) module. The DU #1 610 may include a low-level control and data management unit 803a. For example, the low-level control and data management unit 803a may include a user datagram protocol (UDP) module, a GTP module, an L2 module, or an IP module. The DU #1 610 may include a call management unit 805a. The call management unit 805a may process, through the high-level control management unit 801a, a signal received from the DU #2 620 or a signal to be transmitted to the DU #2 620. The DU #1 610 may include an RLC module 807a. The RLC module 807a may transmit data to the DU #2 620 through the low-level control and data management unit 803a. The description of the RLC module 807a may refer to the RLCs 760 and 785. The DU #1 610 may include a MAC module 809a. The MAC module 809a may include a buffer. The description of the MAC module 809a may refer to the MACs 765 and 780.

The DU #2 620 may include a high-level control management unit 801b. For example, the high-level control management unit 801b may include an SCTP module. The DU #2 620 may include a low-level control and data management unit 803b. For example, the low-level control and data management unit 803b may include a user datagram protocol (UDP) module, a GTP module, an L2 module, or an IP module. The DU #2 620 may include a call management unit 805b. For example, the UDP module may deliver data received from the DU #1 610 to a buffer of a MAC module 809b. The call management unit 805b may process, through the high-level control management unit 801b, a signal received from the DU #1 610 or a signal to be transmitted to the DU #1 610. The DU #2 620 may include an RLC module 807b. The description of the RLC module 807b may refer to the RLCs 760 and 785. The DU #2 620 may include the MAC module 809b. The MAC module 809b may include a buffer. The description of the MAC module 809b may refer to the MACs 765 and 780.

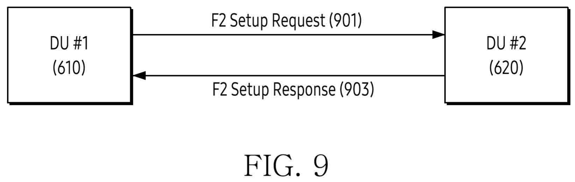

FIG. 9 illustrates an example of a setup procedure between DUs. For example, the DUs may include DU (e.g., the DU #1 210-1, the DU #2 210-2, the DU #1 231, and the DU #2 232), described in FIGS. 2A to 2C, supporting a protocol of an RLC layer and a protocol of a MAC layer. For example, the DUs may include the O-DU 430 described in FIGS. 4A to 4B. The setup procedure may include a process of transmitting serving cell information, CA information, and/or an offset (e.g., a system frame number (SFN) offset) of a DU (e.g., the DU #1 610) to another DU (e.g., the DU #2 620). As an example, the DU may be the O-DU described through FIGS. 4A to 4B.

Referring to FIG. 9, in operation 901, the DU #1 610 may transmit an F2 setup request message to the DU #2 620. According to an embodiment, the DU #1 610 may transmit identification information (e.g., gNB identification information, CU identification information, or DU identification information) of the DU #1 610 to the DU #2 620. According to an embodiment, the DU #1 610 may transmit cell information of the DU #1 610 to the DU #2 620. For example, the F2 setup request message may have the following format.

**[Table 3]**

| **IE/Group Name** | **Presenc e** | **Range** | **IE type and referenc e** | **Semantics descriptio n** | **Criticalit y** | **Assigned Criticalit y** |
|---|---|---|---|---|---|---|
| Message Type | M | | | | YES | reject |
| Global gNB ID | M | | | | | |
| gNB-DU ID | M or O | | | | YES | reject |
| gNB Cell List | | *1* .. *<maxCellingNB* > | | Complete list of cells served by the gNB | YES | reject |
| >Cell Informatio n | | | | | | |

A 'Message Type' IE indicates a type of an F2 setup request message. The 'Message Type' IE may indicate a message code (e.g., one of values from 0 to 255 defined as 8 bits) and a message type. The message type may be one of an 'initiating message', a 'successful outcome', and an 'unsuccessful outcome'. The 'Global gNB ID' IE may include a global ID of a gNB. The 'Global gNB ID' IE may be used to globally identify the gNB. Identification information indicated by the 'Global gNB ID' IE may consist of a PLMN ID and a gNB ID to which the gNB belongs. MCC and MNC may be the same as those included in a CGI. The CGI may consist of a mobile country code (MCC), a mobile network code (MNC), a local area code (LAC), and a cell identity (CI). The 'gNB-DU ID' IE may be identification information for uniquely identifying the DU #1 610 within a gNB (or within a common gNB-CU). The 'gNB Cell List' IE indicates a cell list of the DU #1 610. The 'maxCellingNB' indicates the maximum number of cells capable of being served in the DU #1 610. For example, the 'maxCellingNB' may be 512. The 'Cell Information' IE indicates cell information of the DU #1 610. The cell information may include cells capable of being supported by the DU #1 610 and configuration information for each cell. Examples of the cell information may refer to Tables 5 to 7 described below.

'M' indicates a mandatory component for a message, and 'O' indicates an optional component for a message. The 'M' and/or 'O' illustrated in the above table are exemplary, and specific descriptions should not be construed as limiting specific embodiments of the present disclosure.

In operation 903, the DU #2 620 may transmit an F2 setup response message to a DU #1 610. The F2 setup response message may be used to provide information of the DU #2 620 to the DU #1 610, in response to an information sharing request of the DU #1 610. According to an embodiment, the DU #2 620 may transmit identification information (e.g., gNB identification information, CU identification information, or DU identification information) of the DU #2 620 to the DU #1 610. According to an embodiment, the DU #2 620 may transmit cell information of the DU #2 620 to the DU #1 610. For example, the F2 setup response message may have the following format.

**[Table 4]**

| **IE/Group Name** | **Presenc e** | **Range** | **IE type and referenc e** | **Semantics descriptio n** | **Criticalit y** | **Assigned Criticalit y** |
|---|---|---|---|---|---|---|
| Message Type | M | | | | YES | reject |
| Global gNB ID | M | | | | | |
| gNB-DU ID | MorO | | | | YES | reject |
| gNB Cell List | | 1 .. <maxCellingNB > | | Complete list of cells served by the gNB | YES | reject |
| >Cell Informatio n | | | | | | |

The 'Message Type' IE indicates a type of the F2 setup response message. The 'Message Type' IE may indicate a message code (e.g., one of values from 0 to 255 defined as 8 bits) and a message type. The message type may be one of an 'initiating message', a 'successful outcome', and an 'unsuccessful outcome'. The 'Global gNB ID' IE may include a global ID of the gNB. The 'gNB-DU ID' IE may be identification information for uniquely identifying the DU #2 620 within a gNB (or within a common gNB-CU). The 'gNB Cell List' IE indicates a cell list of the DU #2 620. The 'maxCellingNB' indicates the maximum number of cells capable of being served in the DU #2 620. For example, the 'maxCellingNB' may be 512. The 'Cell Information' IE indicates cell information of the DU #2 620. The cell information may include cells capable of being supported by the DU #2 620 and configuration information for each cell. Examples of the cell information may refer to Tables 5 to 7 described below.

'M' indicates a mandatory component for a message, and 'O' indicates an optional component for a message. The 'M' and/or 'O' exemplified in the above table are exemplary, and specific descriptions should not be construed as limiting specific embodiments of the present disclosure.

A setup procedure through the F2 interface between the DU #1 610 and the DU #2 620 may be used for spectrum aggregation. For spectrum aggregation, the DU may be required to know how a cell of another DU affects in a frequency domain. To this end, cell information of the DU may be shared with another DU through the setup procedure. According to an embodiment, the cell information of the DU may include cell identification information. According to an embodiment, the cell information of the DU may include public land mobile network (PLMN) information. According to an embodiment, the cell information of the DU may include cell frequency information. According to an embodiment, the cell information of the DU may include cell bandwidth information. For example, the cell information of the DU may have a format as shown in the table below.

**[Table 5]**

| **IE/Grou p Name** | **Presenc e** | **Range** | **IE type and reference** | **Semantics descriptio n** | **Criticalit y** | **Assigned Criticalit y** |
|---|---|---|---|---|---|---|
| NR CGI | M | | 9.3.1.12 | | - | |
| NR PCI | M | | INTEGER (0..1007) | Physical Cell ID | - | |
| Served PLMNs | | 1..<maxnoofBPLMN s> | | Broadcast PLMNs in SIB 1 associated to the NR Cell Identity in the *NR CGI* IE | - | |
| >PLMN Identity | M | | 9.3.1.14 | | - | |
| >TAI Slice Support List | MorO | | Slice Support List9.3.1.37 | Supported S-NSSAIs per PLMN or per SNPN. | YES | ignore |
| >Extende d TAI Slice Support List | MorO | | Extended Slice Support List9.3.1.16 5 | Additional Supported S-NSSAIs per PLMN or per SNPN. | YES | reject |
| CHOICE *NR-Mode-Info* | M | | | | - | |
| >FDD | | | | | - | |
| >>FDD Info | | 1 | | | - | |
| >>TDD Info | | | | | | |

The 'NR CGI' IE may be used to globally identify a cell. The CGI may consist of a mobile country code (MCC), a mobile network code (MNC), a local area code (LAC), and a cell identity (CI). The 'NR CGI' IE may include a PLMN identifier and an NR cell identifier. The PLMN indicates a network identification number of a mobile communication operator. The 'NR PCI' IE may indicate a physical cell ID of an NR cell. The 'Served PLMNs' IE may include a PLMN list capable of being supported in the DU #1 610 or the DU #2 620. The 'Served PLMNs' IE may include PLMN identifiers and slices (e.g., single(S)-network slice selection assistance information (NSSAI)) of tracking area identity (TAI) supported for each PLMN. The 'maxnoofBPLMNs' indicates a maximum number of PLMN IDs broadcasted in the corresponding cell. For example, the 'maxnoofBPLMNs' may be 6. The 'NR-Mode-Info' IE indicates whether an NR cell is FDD or TDD.

'M' indicates a mandatory component for a message, and 'O' indicates an optional component for a message. The 'M' and/or 'O' exemplified in the above table are exemplary, and specific descriptions should not be construed as limiting specific embodiments of the present disclosure. In addition to the above description, a section number (e.g., 9.x.y.z) may refer to the TS 38.473 document.

For example, the cell information in Table 5 may have a format as shown in the following example. According to an embodiment, additional information may be added.

**[Table 6]**

| IE/Group Name | Prese nce | Range | IE type and reference | Semantics description | Critica lity | Assign ed Critica lity |
|---|---|---|---|---|---|---|
| | | | | | | |
| NR CGI | M | | 9.3.1.12 | | - | |
| NR PCI | M | | INTEGER (0..1007) | Physical Cell ID | - | |
| Served PLMNs | | 1..<maxnoofBPL MNs> | | Broadcast PLMNs in SIB 1 associated to the NR Cell Identity in the *NR CGI* IE | - | |
| >PLMN Identity | M | | 9.3.1.14 | | - | |
| >TAI Slice Support List | M or O | | Slice Support List9.3.1.37 | Supported S-NSSAIs per PLMN or per SNPN. | YES | ignore |
| >Extended TAI Slice Support List | M or O | | Extended Slice Support List9.3.1.165 | Additional Supported S-NSSAIs per PLMN or per SNPN. | YES | reject |
| CHOICE *NR-Mode-Info* | M | | | | - | |
| >FDD | | | | | - | |
| >>FDD Info | | 1 | | | - | |
| >>>UL FreqInfo | M | | NR Frequency Info9.3.1.17 | This IE is ignored if the *Cell Direction* IE is included and set to "dl-only". | - | |
| >>>DL FreqInfo | M | | NR Frequency Info9.3.1.17 | This IE is ignored if the *Cell Direction* IE is included and set to "ul-only". | - | |
| >>>UL Transmissio n Bandwidth | M | | Transmission Bandwidth9. 3.1.15 | This IE is ignored if the *Cell Direction* IE is included and set to "dl-only". | - | |
| >>>DL Transmissio n Bandwidth | M | | Transmission Bandwidth9. 3.1.15 | This IE is ignored if the *Cell Direction* IE is included and set to "ul-only". | - | |
| >>>UL Carrier List | M or O | | NR Carrier List9.3.1.137 | If included, the *UL Transmission Bandwidth* IE shall be ignored. | YES | ignore |
| >>>DL Carrier List | M or O | | NR Carrier List9.3.1.137 | If included, the *DL Transmission Bandwidth* IE shall be ignored. | YES | ignore |
| >TDD | | | | | - | |
| >>TDD Info | | 1 | | | - | |
| >>>NR FreqInfo | M | | NR Frequency Info9.3.1.17 | | - | |
| >>>Transmi ssion Bandwidth | M | | Transmission Bandwidth9. 3.1.15 | | - | |
| >>>Intended TDD DL-UL Configuratio n | M or O | | 9.3.1.89 | | YES | ignore |
| >>>TDD UL-DL Configuratio n Common NR | M or O | | OCTET STRING | The *tdd-UL-DL-ConfigurationC ommon* as defined in TS 38.331 [8] | YES | ignore |
| >>>Carrier List | M or O | | NR Carrier List9.3.1.137 | If included, the Transmission Bandwidth IE shall be ignored. | YES | ignore |
| *>NR-U* | | | | | YES | ignore |
| >>NR-U Channel Info List | | 1..< maxnoofNR-UChannelIDs> | | | - | |
| >>>NR-U Channel Info Item | | | | | - | |
| >>>>NR-U Channel ID | M | | INTEGER (1.. maxnoofNR-UChannelIDs , ...) | Index to uniquely identify the part of the NR-U Channel Bandwidth consisting of a contiguous set of resource blocks (RBs) on which a channel access procedure is performed in shared spectrum. | - | |
| | | | | | | |
| | | | | Value 1 represents the first part of the NR-U Channel Bandwidth on which a channel access procedure is performed. Value 2 represents the second part of the NR-U Channel Bandwidth on which a channel access procedure is performed, and so on. | | |
| | | | | | | |
| >>>>NR-U ARFCN | M | | INTEGER (0.. maxNRARF CN) | It represents the centre frequency of the NR-U Channel Bandwidth for NR bands restricted to operation with shared spectrum channel access, as defined in TS 37.213 [46]. Allowed values are specified in TS 38.101-1 [26] in Table 5.4.2.3-2, Table 5.4.2.3-3 and Table 5.4.2.3-4. | - | |
| >>>>NR-U Channel Bandwidth | M | | ENUMERAT ED (10MHz, 20MHz, 40MHz, 60 MHz, 80 MHz,. ...) | | | |
| Cell Direction | O | | 9.3.1.78 | | YES | ignore |

According to an embodiment, cell information may include frequency information (e.g., 'UL FreqInfo' IE, 'DL FreqInfo' IE, or 'NR FreqInfo' IE). The frequency information may include an SCS, frequency offset information (an offset between a point A of a common resource block (CRB) 0 and a lowest subcarrier among allocated RBs), and a carrier bandwidth. According to an embodiment, the cell information may include bandwidth information (e.g., 'UL Transmission Bandwidth' IE, 'DL Transmission Bandwidth' IE, or 'Transmission Bandwidth' IE). The bandwidth information may include a subcarrier spacing (SCS) and the number of resource blocks (RBs). For example, the SCS may indicate one of 15, 30, 60, 120, 240, 480, and 960. For example, the number of RBs may indicate one of 11, 18, 24, 25, 31, 32, 33, 38, 51, 52, 62, 65, 66, 78, 79, 93, 106, 107, 121, 124, 132, 133, 135, 148, 160, 162, 189, 216, 217, 245, 248, 264, 270, and 273. According to an embodiment, the cell information may include TDD configuration information (e.g., 'Intended TDD DL-UL Configuration' IE or 'TDD UL-DL Configuration Common NR' IE). The TDD configuration information may include an SCS, cyclic prefix (CP) information (e.g., whether an extended CP is used), DL-UL transmission periodicity, and slot configuration (e.g., the number of DL symbols in a slot and the number of UL symbols in the slot). In addition, the TDD configuration information may include permutation information (e.g., DFU or UFD) indicating an order of DL section, UL section, and flexible section. According to an embodiment, the cell information may include cell information of an unlicensed band. The cell information of the unlicensed band may include channel identification information of the unlicensed band (e.g., 'NR-U Channel ID' IE), frequency information (e.g., 'NR-U ARFCN' IE), and/or bandwidth information (e.g., 'NR-U Channel Bandwidth' IE). The 'maxnoofNR-UChannelIDs' indicates a maximum number of NR-U channel IDs of a corresponding cell. For example, the 'maxnoofNR-UChannelIDs' may be 16. According to an embodiment, the cell information may include direction information (e.g., 'Cell Direction' IE). The direction information indicates whether a corresponding cell is bidirectional, DL, or UL.

'M' indicates a mandatory component for a message, and 'O' indicates an optional component for a message. The 'M' and/or 'O' exemplified in the above table are exemplary, and specific descriptions should not be construed as limiting specific embodiments of the present disclosure. In addition to the above description, a section number (e.g., 9.x.y.z) may refer to the TS 38.473 document.

According to an embodiment, the following information may additionally be added to the above-described cell information. For example, it may have a format as shown in the table below.

**[Table 7]**

| IE/Group Name | Presen ce | Range | IE type and reference | Semantics description | Criticali ty | Assigne d Criticali ty |
|---|---|---|---|---|---|---|
| Extended Served PLMNs List | | 0..1 | | This is included if more than 6 Served PLMNs is to be signalled. | YES | ignore |
| >Extende d Served PLMNs Item | | 1 ..<maxnoofExtendedBP LMNs> | | | | |
| >>PLMN Identity | M | | 9.3.1.14 | | - | |
| >>TAI Slice Support List | O | | Slice Support List9.3.1. 37 | Supported S-NSSAIs per PLMN or per SNPN. | - | |
| >>Extend ed TAI Slice Support List | | | Extended Slice Support List | | | |
| | O | | 9.3.1.208 | Additional Supported S-NSSAIs per PLMN or per SNPN. | YES | reject |
| SFN Offset | O | | | | YES | ignore |
| CA Cell Propertie s | M | | | | | |
| >CA Cell Availabil ity | M | <pcell, scell, both, none,...> | | This is indicate whether the Cell operates as Pcell only, Scell only, both or not support CA | | |
| >CA Type Availabil ity | M | <downlink, uplink, both> | | This is indicate whether the Cell supports downlink only, uplink only or both downlink and uplink.oper ates as Pcell only, Scell only, both or not support CA | | |

According to an embodiment, the cell information may include an additional PLMN list. The 'maxnoofExtendedBPLMNs' indicates a maximum number of PLMN IDs additionally broadcasted in a corresponding cell. For example, the 'maxnoofExtendedBPLMNs' may be 6. According to an embodiment, the cell information may include SFN offset information (e.g., 'SFN Offset' IE). The SFN offset information may include a time offset between an absolute time reference and an SFN #0 start. The SFN offset information is calculated on the assumption that the SFN transmission is started at the absolute time reference, and the selected absolute time reference is 1980-01-06 T00:00:19 International Atomic Time. According to an embodiment, the cell information may include CA information (e.g., 'CA Cell Properties' IE). The CA information may indicate available information when a corresponding cell is configured or activated for CA. The CA information may include cell availability information. The cell availability information may indicate whether a corresponding cell is available as a PCell, available as an SCell, or available as both the PCell and the SCell. The CA information may include type information. The type information may indicate whether a corresponding cell is a DL cell, a UL cell, or whether all of them are available.

'M' indicates a mandatory component for a message, and 'O' indicates an optional component for a message. The 'M' and/or 'O' exemplified in the above table are exemplary, and specific descriptions should not be construed as limiting specific embodiments of the present disclosure. In addition to the above description, a section number (e.g., 9.x.y.z) may refer to the TS 38.473 document.

Although Tables 3 and 4 describe a gNB and a DU of the gNB (hereinafter referred to as gNB-DU) as examples, the embodiments of the present disclosure are not limited thereto. For example, the DU may be a network entity of an eNB. In the above-described messages (e.g., the F2 setup request message, the F2 setup response message), a global eNB ID and/or an eNB-DU ID may be used to identify the DU.

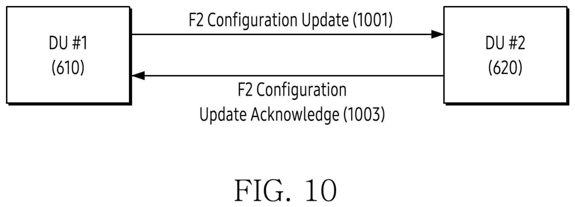

FIG. 10 illustrates an example of a configuration update procedure between DUs. For example, the DUs may include DU (e.g., the DU #1 210-1, the DU #2 210-2, the DU #1 231, and the DU #2 232), described in FIGS. 2A through 2C, supporting a protocol of RLC layer and a protocol of MAC layer. For example, the DUs may include the O-DU 430 described in FIGS. 4A through 4B. A purpose of the configuration update procedure is to update application-level configuration data required for the DU #1 610 and the DU #2 620 to properly interoperate over the F2 interface. The F2 configuration update procedure does not affect an existing UE-related context and may use non-UE associated signaling. The configuration update procedure may include a process of updating serving cell information, CA information, and/or an offset (e.g., a system frame number (SFN) offset) of a DU (e.g., the DU #1 610) to another DU (e.g., the DU #2 620). As an example, the DU may be the O-DU described in FIGS. 4A through 4B.

Referring to FIG. 10, in operation 1001, the DU #1 610 may transmit an F2 configuration update message to the DU #2 620. The DU #1 610 may initiate the procedure by transmitting the F2 configuration update message to the DU #2 620. The F2 configuration update message may include an appropriate set of updated configuration data used for operation. The DU #2 620 may acknowledge successful updating of the configuration data by responding with an F2 configuration update acknowledgement message. In a case that the F2 configuration update message does not include any information element, the DU #2 620 may interpret that the corresponding configuration data has not been changed and may continue operating the F2 interface with the existing related configuration data. Through the F2 configuration update request message, the DU #1 610 may provide the DU #2 620 with cell information of a cell to be added, deleted, or modified. For example, the F2 configuration update message may have the following format.

**[Table 8]**

| IE/Group Name | Presence | Range | IE type and reference | Semantics description | Criticality | Assigned Criticality |
|---|---|---|---|---|---|---|
| Message Type | M | | | | | |
| Global gNB ID | M | | | | | |
| gNB-DU ID | O | | | | | |
| gNB Cell Add List | M | <0..maxCellingNB> | | | | |
| >Served Cells To Add Item | | | | | | |
| >>CA Cell Information | | | | | | |
| gNB Cell Modify List | M | <0..maxCellingNB> | | | | |
| >Served Cells To Modify Item | | | | | | |
| >>Old NR CGI | | | | | | |
| >>CA Cell Information | | | | | | |
| gNB Cell Delete List | M | <0..maxCellingNB> | | | | |
| >Served Cells To Delete Item | | | | | | |
| >>Old NR CGI | | | | | | |

The 'Message Type' IE indicates a type of the F2 setup response message. The 'Message Type' IE may indicate a message code (e.g., one of values from 0 to 255 defined as 8-bit) and a message type. The message type may be one of 'initiating message', 'successful outcome', and 'unsuccessful outcome'. The 'Global gNB ID' IE may include a global ID of the gNB. The 'gNB-DU ID' IE may be identification information for uniquely identifying the DU #2 620 within the gNB (or within a common gNB-CU). The 'gNB Cell Add List' IE indicates a list of cells to be added at the DU #1 620. The 'gNB Cell Modify List' IE indicates a list of cells to be modified at the DU #1 620. The 'gNB Cell Delete List' IE indicates a list of cells to be deleted at the DU #1 620. According to an embodiment, the above-described lists may include cell information of corresponding cells. The 'maxCellingNB' indicates a maximum number of cells capable of being served in the corresponding DU. For example, the 'maxCellingNB' may be 512. According to an embodiment, the cell information may include configuration information of the corresponding cell and/or system information of the corresponding cell owned by the DU #1 620. The configuration information of the cell may refer to Tables 5 through 7. According to an embodiment, the cell information may include CA information (e.g., 'CA Cell Information' IE). The CA information may refer to Tables 5 through 7. For example, the CA information may include PLMN information (e.g., 'Served PLMNs' IE). For example, the CA information may include frequency information (e.g., 'NR-Mode-Info' IE). For example, the CA information may indicate available information (e.g., 'CA Cell Properties' IE) when the corresponding cell is configured or activated for CA. The CA information may include cell availability information. The cell availability information may indicate whether the corresponding cell is available as a PCell, available as an SCell, or available as both the PCell and the SCell. The CA information may include type information. The type information may indicate whether the corresponding cell is a DL cell, a UL cell, or both. According to an embodiment, the cell information may include cell identification information (e.g., 'Old NR CGI' IE) of a cell to be changed or deleted.

'M' indicates a mandatory component for a message, and 'O' indicates an optional component for a message. The 'M' and/or 'O' exemplified in the above table are exemplary, and specific descriptions should not be construed as limiting specific embodiments of the present disclosure.

In operation 1003, the DU #2 620 may transmit an F2 configuration update acknowledge message to the DU #1 610. Through the F2 configuration update acknowledge message, the DU #2 620 may provide the DU #1 610 with cell information of a cell to be added, deleted, or modified at the DU #2 620. For example, the F2 configuration update acknowledge message may have the following format.

**[Table 9]**

| **IE/Group Name** | **Presence** | **Range** | **IE type and referenc e** | **Semantics description** | **Critical ity** | **Assigned Criticality** |
|---|---|---|---|---|---|---|
| Message Type | M | | | | YES | reject |
| Criticality Diagnostics | M or O | | | | YES | ignore |

The 'Message Type' IE indicates a type of the F2 setup response message. The 'Message Type' IE may indicate a message code (e.g., one of values from 0 to 255 defined as 8-bit) and a message type. The message type may be one of 'initiating message', 'successful outcome', and 'unsuccessful outcome'. The 'Criticality Diagnostics' IE may be transmitted In a case that a part of the received message is not comprehended or missed, or in a case that the message includes a logical error. The 'Criticality Diagnostics' IE may include information regarding the IE that is not comprehended or missed.

'M' indicates a mandatory component for a message, and 'O' indicates an optional component for a message. The 'M' and/or 'O' exemplified in the above table are exemplary, and specific descriptions should not be construed as limiting specific embodiments of the present disclosure.

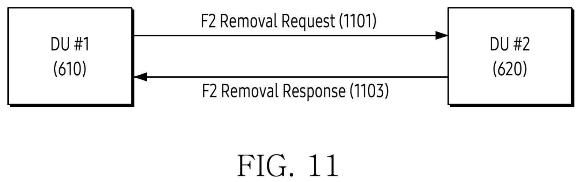

FIG. 11 illustrates an example of a removal procedure between DUs. For example, the DUs may include DU (e.g., the DU #1 210-1, the DU #2 210-2, the DU #1 231, and the DU #2 232), described in FIGS. 2A to 2C, supporting a protocol of an RLC layer and a protocol of a MAC layer. For example, the DUs may include the O-DU 430 described in FIGS. 4A to 4B. A purpose of a removal procedure is to remove, in a controlled manner, an interface instance between the DU #1 610 and the DU #2 620 and all related resources. If the removal is successful, the DU #1 610 may delete existing application-level configuration data from the DU #2 620 in the procedure.

Referring to FIG. 11, in operation 1101, the DU #1 610 may transmit an F2 removal request message to the DU #2 620. The DU #1 610 may initiate the procedure by sending the F2 removal request message to the DU #2 620. Upon receiving the F2 removal request message, the DU #2 620 may determine to remove all resources associated with a signaling connection. According to an embodiment, the DU #1 610 may transmit identification information (e.g., gNB identification information, CU identification information, DU identification information) of the DU #1 610 to the DU #2 620. According to an embodiment, the DU #1 610 may transmit cause information to the DU #2 620. For example, the F2 removal request message may have the following format.

**[Table 10]**

| **IE/Group Name** | **Presenc e** | **Rang e** | **IE type and reference** | **Semantics description** | **Criticalit y** | **Assigned Criticality** |
|---|---|---|---|---|---|---|
| Message Type | M | | | | YES | reject |
| Global gNB ID | M | | | | | |
| gNB-DU ID | MorO | | | | YES | reject |
| Cause | M | | (TS38.473 9.3.1.2 Cause + additional Causes (i.e., Long delay)) | | YES | ignore |

The 'Message Type' IE indicates a type of the F2 setup request message. The 'Message Type' IE may indicate a message code (e.g., one of values from 0 to 255 defined as 8-bit) and a message type. The message type may be one of 'initiating message', 'successful outcome', and 'unsuccessful outcome'. The 'Global gNB ID' IE may include a global ID of a gNB. The 'gNB-DU ID' IE may be identification information for uniquely identifying the DU #1 610 within the gNB (or within a common gNB-CU). The 'Cause' IE may indicate a cause of initiation of the F2 removal procedure. The 'Cause' IE may indicate a reason for a particular event in an F2AP protocol. For example, the following format may be referred to for the 'Cause' IE.

**[Table 11]**

| **IE/Group Name** | **Presenc e** | **Range** | **IE type and reference** | **Semantics description** |
|---|---|---|---|---|
| CHOIC E Cause Group | M | | | |
| > Radio Network Layer | | | | |
| » Radio Network Layer Cause | M | | ENUMERATED(Unspecified, No Radio Resources Available, Normal Release, ..., Cell not available, Resources not available for the slice(s), ... /* lots of per UE-level inter-DU call processing error causes*/ ...) | |
| > Transport Layer | | | | |
| >> Transport | M | | ENUMERATED(Unspecified, Transport Resource Unavailable, ... | |
| Layer Cause | | | Long (Backhaul) Delay, ...) | |
| > Protocol | | | | |
| >> Protocol Cause | M | | ENUMERATED(Transfer Syntax Error, Abstract Syntax Error (Reject), Abstract Syntax Error (Ignore and Notify), Message not Compatible with Receiver State, Semantic Error, Abstract Syntax Error (Falsely Constructed Message, Unspecified,...) | |
| > Misc | | | | |
| >> Miscellaneous Cause | M | | ENUMERATED(Control Processing Overload, Not enough User Plane Processing Resources, Hardware Failure, O&M Intervention, Unspecified, ...) | |

'M' indicates a mandatory component for a message, and 'O' indicates an optional component for a message. The 'M' and/or 'O' exemplified in the above table are exemplary, and specific descriptions should not be construed as limiting specific embodiments of the present disclosure. According to an embodiment, the F2 removal request message may include cause information (e.g., the 'Cause' IE) indicating a delay (e.g., long backhaul delay). In general, a 'not supported' cause value indicates that the related function does not exist. On the other hand, a 'not available' cause value indicates that the related function exists, but there are insufficient resources available to perform a requested operation. Meanings for each type may be configured as shown in the table below.

**[Table 12]**

| **Transport Layer cause** | **Meaning** |
|---|---|
| Unspecified | Sent when none of the above cause values applies but still the cause is Transport Network Layer related. |
| Transport Resource Unavailable | The required transport resources are not available. |
| Long (Backhaul) Delay | The backhaul delay between two nodes is longer than the threshold so that the required operator cannot be fulfilled. |

In operation 1103, the DU #2 620 may transmit the F2 removal response message to the DU #1 610. For example, the F2 removal response message may have the following format.

**[Table 13]**

| **IE/Group Name** | **Presen ce** | **Range** | **IE type and reference** | **Semantics description** | **Criticality** | **Assigned Criticality** |
|---|---|---|---|---|---|---|
| Message Type | M | | | | YES | reject |
| Global gNB ID | M | | | | | |
| gNB-DU ID | M or O | | | | YES | reject |
| Criticality Diagnostics | M or O | | | | YES | ignore |

The 'Message Type' IE indicates a type of the F2 setup response message. The 'Message Type' IE may indicate a message code (e.g., one of values from 0 to 255 defined as 8-bit) and a message type. The message type may be one of 'initiating message', 'successful outcome', and 'unsuccessful outcome'. The 'Global gNB ID' IE may include a global ID of a gNB. The 'gNB-DU ID' IE may be identification information for uniquely identifying the DU #2 620 within the gNB (or within a common gNB-CU). The 'Criticality Diagnostics' IE may be transmitted in a case that a part of a received message is not comprehended, or missed, or in a case that the message includes a logical error. The 'Criticality Diagnostics' IE may include information on an IE that is not comprehended or missed.

'M' indicates a mandatory component for a message, and 'O' indicates an optional component for a message. The 'M' and/or 'O' exemplified in the above table are exemplary, and specific descriptions should not be construed as limiting specific embodiments of the present disclosure.

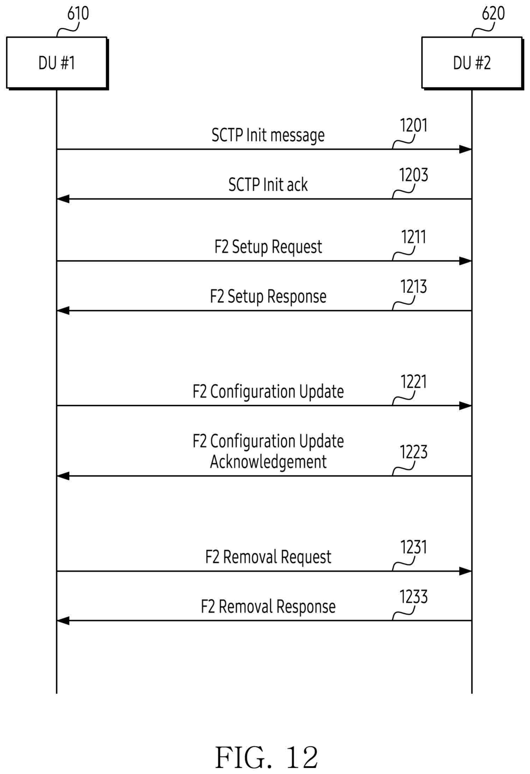

FIG. 12 is a diagram illustrating signaling for configuring an interface between DUs. For example, the DUs may include DU (e.g., the DU #1 210-1, the DU #2 210-2, the DU #1 231, and the DU #2 232), described in FIGS. 2A to 2C, supporting a protocol of an RLC layer and a protocol of a MAC layer. For example, the DUs may include the O-DU 430 described in FIGS. 4A to 4B.

Referring to FIG. 12, in operation 1201, the DU #1 610 may transmit an SCTP initiation message to the DU #2 620. An IP address for an SCTP connection with the DU #2 620 may be pre-configured in the DU #1 610. The DU #2 620 may transmit an SCTP initiation acknowledge message to the DU #1 610. An IP address for an SCTP connection with the DU #1 610 may be pre-configured in the DU #2 620.

When the SCTP connection is configured, an F2 setup procedure may be performed. In operation 1211, the DU #1 610 may transmit an F2 setup request message to the DU #2 620. For the F2 setup request message, the description of operation 901 of FIG. 9 may be referred to. In operation 1213, the DU #2 620 may transmit an F2 setup response message to the DU #1 610. For the F2 setup response message, a description of operation 903 of FIG. 9 may be referred to.

After the F2 setup procedure is completed, an F2 configuration update procedure may be performed if necessary. In operation 1221, the DU #1 610 may transmit an F2 configuration update message to the DU #2 620. For the F2 configuration update message, a description of operation 1001 of FIG. 10 may be referred to. In operation 1223, the DU #2 620 may transmit an F2 configuration update acknowledgement message to the DU #1 610. For the F2 configuration update acknowledgement message, a description of operation 1003 of FIG. 10 may be referred to.

Thereafter, if it is determined that it is necessary to release a connection of the F2 interface, an F2 removal procedure may be initiated. In operation 1231, the DU #1 610 may transmit an F2 removal request message to the DU #2 620. For the F2 removal request message, a description of operation 1101 of FIG. 11 may be referred to. In operation 1233, the DU #2 620 may transmit an F2 removal response message to the DU #1 610. For the F2 removal response message, a description of operation 1103 of FIG. 11 may be referred to.

In FIG. 12, the F2 removal procedure initiated by the DU #1 610 is described, but embodiments of the present disclosure are not limited thereto. If the DU #2 620 determines that it is necessary to release a connection of the F2 interface, the DU #2 620 may initiate the F2 removal procedure by transmitting the F2 removal request message to the DU #1 610.

According to embodiments, a method performed by a first distributed unit (DU) is provided. The method may comprise transmitting, to a second DU via a communication interface between the first DU and the second DU, a setup request message. The method may comprise receiving, from the second DU, a setup response message. The setup request message may include a global ID of a base station of the first DU, first identification information of the first DU in the base station, and cell information of each of one or more first cells of the first DU. The setup response message may include a global ID of a base station of the second DU, second identification information of the second DU in the base station, and cell information of each of one or more second cells of the second DU.

According to an embodiment, the cell information may include identification information, public land mobile network (PLMN) information, and frequency information. The identification information may include a cell global identity (CGI) and a physical cell identity (PCI) of a corresponding cell. The PLMN information may include a PLMN identifier of a corresponding cell and a list of one or more supported slices of the corresponding cell. The frequency information may include bandwidth information of a corresponding cell and carrier information of the corresponding cell.

According to an embodiment, the frequency information may indicate whether a corresponding cell is a frequency division duplex (FDD) cell or a time division duplex (TDD) cell. The frequency information may further include TDD configuration information for the TDD cell.

According to an embodiment, the cell information may include cell availability information and cell type information. The cell availability information may indicate whether a corresponding cell is operable only as a primary cell (PCell) of carrier aggregation (CA), only as a secondary cell (SCell), as both the PCell and the SCell, or as neither the PCell nor the Scell. The cell type information may indicate whether a corresponding cell is available only for downlink, only for uplink, or for both downlink and uplink.

According to an embodiment, the method may comprise transmitting, to the second DU via the communication interface, a configuration update message. The method may comprise receiving, from the second DU, a configuration update acknowledgement message. The configuration update message may include cell information for a cell among the one or more first cells to be added, changed, and/or deleted.

According to an embodiment, the method may comprise receiving, from the second DU via the communication interface, another configuration update message. The method may comprise transmitting, to the second DU, a configuration update acknowledgement message. The configuration update message may include cell information for a cell among the one or more second cells to be added, changed, and/or deleted.

According to an embodiment, the configuration update message may include a cell global identity (CGI) for a cell to be deleted or changed.

According to an embodiment, the method may comprise transmitting, to the second DU via the communication interface, a removal request message. The method may comprise receiving, from the second DU, a removal response message. The removal request message may include information on a cause for releasing resources related to a connection between the first DU and the second DU.

According to an embodiment, the information on the cause may indicate a delay in the communication interface between the first DU and the second DU.

According to an embodiment, the one or more first cells may include a cell of an unlicensed band. Cell information for the cell of the unlicensed band may include a channel identity (ID) of the unlicensed band, an absolute radio frequency channel number (ARFCN), and a channel bandwidth of the unlicensed band.

According to embodiments, an electronic device for a first distributed unit (DU) is provided. The electronic device may comprise memory storing instructions. The instructions, when executed on the first DU, may cause the first DU to transmit, to a second DU via a communication interface between the first DU and the second DU, a setup request message. The instructions, when executed on the first DU, may cause the first DU to receive, from the second DU, a setup response message. The setup request message may include a global ID of a base station of the first DU, first identification information of the first DU in the base station, and cell information of each of one or more first cells of the first DU. The setup response message may include a global ID of a base station of the second DU, second identification information of the second DU in the base station, and cell information of each of one or more second cells of the second DU.

According to an embodiment, the cell information may include identification information, public land mobile network (PLMN) information, and frequency information. The identification information may include a cell global identity (CGI) and a physical cell identity (PCI) of a corresponding cell. The PLMN information may include a PLMN identifier of a corresponding cell and a list of one or more supported slices of the corresponding cell. The frequency information may include bandwidth information of a corresponding cell and carrier information of the corresponding cell.

According to an embodiment, the frequency information may indicate whether a corresponding cell is a frequency division duplex (FDD) cell or a time division duplex (TDD) cell. The frequency information may further include TDD configuration information for the TDD cell.

According to an embodiment, the cell information may include cell availability information and cell type information. The cell availability information may indicate whether a corresponding cell is operable only as a primary cell (PCell) of carrier aggregation (CA), only as a secondary cell (SCell), as both the PCell and the SCell, or as neither the PCell nor the Scell. The cell type information may indicate whether a corresponding cell is available only for downlink, only for uplink, or for both downlink and uplink.

According to an embodiment, the instructions, when executed on the first DU, may cause the first DU to transmit, to the second DU via the communication interface, a configuration update message. The instructions, when executed on the first DU, may cause the first DU to receive, from the second DU, a configuration update acknowledgement message. The configuration update message may include cell information for a cell among the one or more first cells to be added, changed, and/or deleted.

According to an embodiment, the instructions, when executed on the first DU, may cause the first DU to receive, from the second DU through the communication interface, another configuration update message. The instructions, when executed on the first DU, may further cause the first DU to transmit a configuration update acknowledgement message to the second DU. The configuration update message may include cell information for a cell among the one or more second cells to be added, changed, and/or deleted.

According to an embodiment, the configuration update message may include a cell global identity (CGI) for a cell to be deleted or changed.

According to an embodiment, the instructions, when executed on the first DU, may cause the first DU to transmit, to the second DU through the communication interface, a removal request message. The instructions, when executed on the first DU, may further cause the first DU to receive a removal response message from the second DU. The removal request message may include information regarding a cause for removing resources associated with a connection between the first DU and the second DU.

According to an embodiment, the information on the cause may indicate a delay in the communication interface between the first DU and the second DU.

According to an embodiment, the one or more first cells may include a cell of an unlicensed band. Cell information for the cell of the unlicensed band may include a channel identity (ID) of the unlicensed band, an absolute radio frequency channel number (ARFCN), and a channel bandwidth of the unlicensed band.

According to embodiments, an electronic device of a first distributed unit (DU) is provided. The electronic device may comprise memory, at least one processor, and at least one transceiver. The at least one processor may control the at least one transceiver to transmit, to a second DU through a communication interface between the first DU and the second DU, a setup request message. The at least one processor may control the at least one transceiver to receive a setup response message from the second DU. The setup request message may include a global ID for a base station of the first DU, first identification information of the first DU in the base station, and cell information of each of one or more first cells of the first DU. The setup response message may include a global ID for a base station of the second DU, second identification information of the second DU in the base station, and cell information of each of one or more second cells of the second DU.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}₎, or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A method performed by a first distributed unit (DU), comprising:
transmitting, to a second DU via a communication interface between the first DU and the second DU, a setup request message; and
receiving, from the second DU, a setup response message,
wherein the setup request message includes a global ID of a base station of the first DU, first identification information of the first DU in the base station, and cell information of each of one or more first cells of the first DU, and
wherein the setup response message includes a global ID of a base station of the second DU, second identification information of the second DU in the base station, and cell information of each of one or more second cells of the second DU.

2. The method of claim 1,
wherein the cell information includes identification information, public land mobile network (PLMN) information, and frequency information,
wherein the identification information includes a cell global identity (CGI) and a physical cell identity (PCI) of a corresponding cell,
wherein the PLMN information includes a PLMN identifier of a corresponding cell and a list of one or more supported slices of the corresponding cell, and
wherein the frequency information includes bandwidth information of a corresponding cell and carrier information of the corresponding cell.

3. The method of claim 2,
wherein the frequency information indicates whether a corresponding cell is a frequency division duplex (FDD) cell or a time division duplex (TDD) cell, and
wherein the frequency information further includes TDD configuration information for the TDD cell.

4. The method of claim 1,
wherein the cell information includes cell availability information and cell type information,
wherein the cell availability information indicates whether a corresponding cell is operable only as a primary cell (PCell) of carrier aggregation (CA), only as a secondary cell (SCell), as both the PCell and the SCell, or as neither the PCell nor the SCell, and
wherein the cell type information indicates whether a corresponding cell is available only for downlink, only for uplink, or for both downlink and uplink.

5. The method of claim 1, further comprising:
transmitting, to the second DU via the communication interface, a configuration update message; and
receiving, from the second DU, a configuration update acknowledgement message,
wherein the configuration update message includes cell information for a cell among the one or more first cells to be added, changed, and/or deleted.

6. The method of claim 5, further comprising:
receiving, from the second DU via the communication interface, another configuration update message; and
transmitting, to the second DU, a configuration update acknowledgement message,
wherein the configuration update message includes cell information for a cell among the one or more second cells to be added, changed, and/or deleted.

7. The method of claim 5,
wherein the configuration update message includes a cell global identity (CGI) for a cell to be deleted or changed.

8. The method of claim 1, further comprising:
transmitting, to the second DU via the communication interface, a removal request message; and
receiving, from the second DU, a removal response message,
wherein the removal request message includes information on a cause for releasing resources related to a connection between the first DU and the second DU.

9. The method of claim 1,
wherein the information on the cause indicates a delay in the communication interface between the first DU and the second DU.

10. The method of claim 1,
wherein the one or more first cells include a cell of an unlicensed band, and
wherein cell information for the cell of the unlicensed band includes a channel identity (ID) of the unlicensed band, an absolute radio frequency channel number (ARFCN), and a channel bandwidth of the unlicensed band.

11. An electronic device for a first distributed unit (DU), comprising:
memory storing instructions,
wherein the instructions, when executed on the first DU, cause the first DU to:
transmit, to a second DU via a communication interface between the first DU and the second DU, a setup request message; and
receive, from the second DU, a setup response message,
wherein the setup request message includes a global ID of a base station of the first DU, first identification information of the first DU in the base station, and cell information of each of one or more first cells of the first DU, and
wherein the setup response message includes a global ID of a base station of the second DU, second identification information of the second DU in the base station, and cell information of each of one or more second cells of the second DU.

12. The electronic device of claim 11,
wherein the cell information includes identification information, public land mobile network (PLMN) information, and frequency information,
wherein the identification information includes a cell global identity (CGI) and a physical cell identity (PCI) of a corresponding cell,
wherein the PLMN information includes a PLMN identifier of a corresponding cell and a list of one or more supported slices of the corresponding cell, and
wherein the frequency information includes bandwidth information of a corresponding cell and carrier information of the corresponding cell.

13. The electronic device of claim 12,
wherein the frequency information indicates whether a corresponding cell is a frequency division duplex (FDD) cell or a time division duplex (TDD) cell, and
wherein the frequency information further includes TDD configuration information for the TDD cell.

14. The electronic device of claim 11,
wherein the cell information includes cell availability information and cell type information,
wherein the cell availability information indicates whether a corresponding cell is operable only as a primary cell (PCell) of carrier aggregation (CA), only as a secondary cell (SCell), as both the PCell and the SCell, or as neither the PCell nor the SCell, and
wherein the cell type information indicates whether a corresponding cell is available only for downlink, only for uplink, or for both downlink and uplink.

15. The electronic device of claim 11,
wherein the instructions, when executed on the first DU, further cause the first DU to:
transmit, to the second DU via the communication interface, a configuration update message; and
receive, from the second DU, a configuration update acknowledgement message,
wherein the configuration update message includes cell information for a cell among the one or more first cells to be added, changed, and/or deleted.
